# EUROPEAN PATENT APPLICATION

(11) **EP 4 794 171 A1**
(43) Date of publication of application: **19.08.2026**
(21) Application number: 24877631.2
(22) Date of filing: 10.10.2024
(51) Int. Cl.: H02J 50/10, H02J 50/80

(54) **METHOD AND DEVICE FOR AUTHENTICATION OPERATION IN WIRELESS POWER TRANSFER SYSTEM**

(30) Priority: 10.10.2023 KR 20230134446
(71) Applicant: LG ELECTRONICS, INC., Seoul 07336 (KR)
(72) Inventor: YOOK, Gyunghwan, Seoul 06772 (KR); KWON, Taewook, Seoul 06772 (KR)
(74) Representative: Mooser, Sebastian Thomas
(86) International application number: PCT/KR2024/096306
(87) International publication number: WO 2025/080096

(57) **Abstract**

The present disclosure provides a method and a device, comprising: receiving, by a wireless power transmitter, configuration data from a wireless power receiver in a discovery state; exchanging, by the wireless power transmitter, messages with the wireless power receiver in a connected state after the discovery state; and transmitting, by the wireless power transmitter, power to the wireless power receiver in a power state after the connected state, wherein the wireless power transmitter transmits or receives information about changing roles between an authentication initiator and an authentication responder.

## Description

### TECHNICAL FIELD

The present disclosure is related to wireless power transfer.

### BACKGROUND ART

Wireless power transmission technology is a technology transferring power wirelessly between a power source and an electronic device. For example, wireless power transmission technology enables charging a battery of a wireless terminal by merely placing the wireless terminal such as a smartphone or a tablet on a wireless charging pad, thereby providing more excellent mobility, convenience, and safety compared to a wired charging environment using a conventional wired charging connector. In addition to wireless charging of a wireless terminal, wireless power transmission technology is receiving attention as replacing a conventional wired power transmission environment in various fields such as an electric vehicle, various wearable devices such as a Bluetooth earphone or 3D glasses, a home appliance device, furniture, an underground facility, a building, a medical device, a robot, leisure, and the like.

A wireless power transmission method is also referred to as a contactless power transmission method, a no point of contact power transmission method, or a wireless charging method. A wireless power transmission system may be configured with a wireless power transmission apparatus supplying electrical energy in a wireless power transmission method, and a wireless power reception apparatus receiving electrical energy wirelessly supplied from the wireless power transmission apparatus and supplying power to a power receiving apparatus such as a battery cell.

Wireless power transmission technology is diverse, such as a method of transferring power through magnetic coupling, a method of transferring power through a radio frequency (RF), a method of transferring power through a microwave, a method of transferring power through an ultrasonic wave, and the like. A method based on magnetic coupling is classified again into a magnetic induction method and a magnetic resonance method. A magnetic induction method is a method of transmitting energy using a current induced in a receiving-side coil due to a magnetic field generated in a transmitting-side coil battery cell based on electromagnetic coupling between a transmitting-side coil and a receiving-side coil. A magnetic resonance method is similar to a magnetic induction method in that it uses a magnetic field. However, a magnetic resonance method is different from magnetic induction in an aspect that resonance occurs when a specific resonance frequency is applied to a transmitting-side coil and a receiving-side coil, and due to this, energy is transferred by a phenomenon in which a magnetic field is concentrated at both ends of a transmitting side and a receiving side.

### SPECIFICATION

### TECHNICAL SOLUTION

Based on an embodiment of the present specification, a wireless power transmitter may transmit or receive information related to changing a role between an authentication initiator and an authentication responder.

Based on the present specification, there is an effect that a Ki authentication operation is implemented.

An effect that can be obtained through a specific example of the present specification is not limited to the effects listed above. For example, there may exist various technical effects that a person having ordinary skill in the related art can understand or derive from the present specification. Accordingly, a specific effect of the present specification is not limited to those explicitly described in the present specification, and may include various effects that can be understood or derived from a technical feature of the present specification.

### BRIEF DESCRIPTION OF THE DRAWINGS

FIG. 1 is a block diagram of a wireless power system 10 based on an embodiment.
FIG. 2 is a block diagram of a wireless power system 10 based on another embodiment.
FIG. 3 illustrates an embodiment of various electronic devices into which a wireless power transmission system is introduced.
FIG. 4 is a block diagram of a wireless power transmission system based on an embodiment.
FIG. 5 is a diagram illustrating an example of a Bluetooth communication architecture to which an embodiment based on the present specification can be applied.
FIG. 6 is a block diagram illustrating a wireless power transmission system using BLE communication based on an example.
FIG. 7 is a block diagram illustrating a wireless power transmission system using BLE communication based on another example.
FIG. 8 is a state transition diagram for explaining a wireless power transmission procedure.
FIG. 9 schematically illustrates an example related to a protocol of a Ping Phase 810.
FIG. 10 schematically illustrates an example related to a protocol of a Configuration Phase 820.
FIG. 11 is a diagram illustrating a message field of a configuration packet (CFG) of a wireless power reception apparatus based on an embodiment.
FIG. 12 is a flowchart schematically illustrating a protocol of a negotiation phase or a renegotiation phase based on an embodiment.
FIG. 13 is a diagram illustrating a message field of a capability packet (CAP) of a wireless power transmission apparatus based on an embodiment.
FIG. 14 schematically illustrates a flowchart of a data flow related to a Power Transfer Phase 840 in a baseline protocol.
FIG. 15 schematically illustrates a flowchart of a data flow related to the Power Transfer Phase 840 in an extended protocol.
FIG. 16 illustrates a data stream of an application level between the wireless power transmitter 100 and the wireless power receiver 200 based on an example.
FIG. 17 illustrates a power control method based on an embodiment.
FIG. 18 schematically illustrates a structure of an MPP ID packet.
FIG. 19 schematically illustrates an example of an XID packet in an MPP.
FIG. 20 schematically illustrates a protocol in an MPP restricted mode.
FIG. 21 and FIG. 22 schematically illustrate a protocol in an MPP full mode.
FIG. 23 is a diagram illustrating an overview related to a power transfer protocol state.
FIG. 24 is a diagram illustrating a range of a driving signal.
FIG. 25 schematically illustrates an example related to NFC communication having a power collection function using the same antenna.
FIG. 26 is a diagram illustrating an authentication protocol of a wireless power receiver and a wireless power transmitter.
FIG. 27 is a flowchart of a method of transferring wireless power based on an embodiment of the present specification.
FIG. 28 schematically illustrates an example of information related to changing a role between an authentication initiator and an authentication responder.
FIG. 29 schematically illustrates an example of specific information received by a wireless power transmitter.
FIG. 30 schematically illustrates an example of specific information transmitted by a wireless power transmitter.
FIG. 31 is a flowchart of a method of transferring wireless power from a viewpoint of a wireless power transmitter, based on an embodiment of the present specification.
FIG. 32 is a flowchart of a method of receiving wireless power from a viewpoint of a wireless power receiver, based on an embodiment of the present specification.
FIG. 33 illustrates one example of a wireless power transmitter that can be applied to the present specification.
FIG. 34 illustrates one example of a wireless power receiver that can be applied to the present specification.

### DESCRIPTION OF EXEMPLARY EMBODIMENTS

In the present specification, "A or B" may mean "only A", "only B", or "both A and B". In other words, in the present specification, "A or B" may be interpreted as "A and/or B". For example, in the present specification, "A, B or C" may mean "only A", "only B", "only C", or "any combination of A, B and C".

A slash (/) or a comma used in the present specification may mean "and/or". For example, "A/B" may mean "A and/or B". Accordingly, "A/B" may mean "only A", "only B", or "both A and B". For example, "A, B, C" may mean "A, B or C".

In the present specification, "at least one of A and B" may mean "only A", "only B", or "both A and B". In addition, in the present specification, an expression "at least one of A or B" or "at least one of A and/or B" may be interpreted the same as "at least one of A and B".

In addition, in the present specification, "at least one of A, B and C" may mean "only A", "only B", "only C", or "any combination of A, B and C". In addition, "at least one of A, B or C" or "at least one of A, B and/or C" may mean "at least one of A, B and C".

In addition, parentheses used in the present specification may mean "for example". Specifically, when indicated as "control information (PDCCH)", "PDCCH" may be proposed as an example of "control information". In other words, "control information" in the present specification is not limited to "PDCCH", and "PDCCH" may be proposed as an example of "control information". In addition, even when indicated as "control information (that is, PDCCH)", "PDCCH" may be proposed as an example of "control information".

In the present specification, technical features individually described within one drawing may be individually implemented, or may be simultaneously implemented. A term "wireless power" used hereinafter is used to mean any form of energy related to an electric field, a magnetic field, an electromagnetic field, etc. transferred from a wireless power transmitter to a wireless power receiver without use of physical electromagnetic conductors. Wireless power may also be called a wireless power signal, and may mean an oscillating magnetic flux enclosed by a primary coil and a secondary coil. For example, power conversion in a system is described here to wirelessly charge devices including a mobile phone, a cordless phone, an iPod, an MP3 player, a headset, and the like. Generally, a basic principle of wireless power transmission includes, for example, a method of transferring power through magnetic coupling, a method of transferring power through a radio frequency (RF), a method of transferring power through a microwave, and a method of transferring power through an ultrasonic wave.

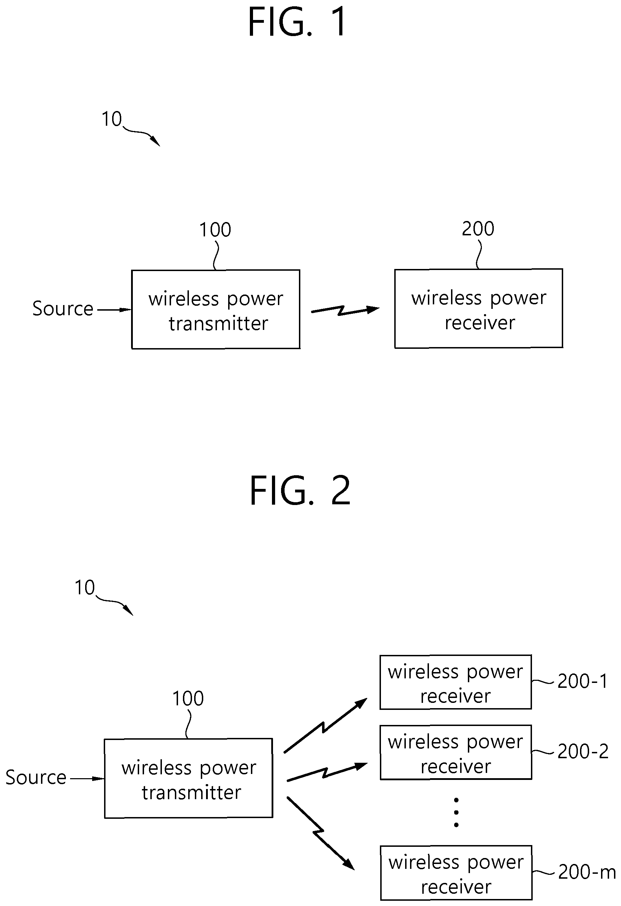

FIG. 1 is a block diagram of a wireless power system 10 based on an embodiment.

Referring to FIG. 1, the wireless power system 10 includes a wireless power transmission apparatus 100 and a wireless power reception apparatus 200.

The wireless power transmission apparatus 100 receives power from an external power source S and generates a magnetic field. The wireless power reception apparatus 200 generates a current using the generated magnetic field and wirelessly receives power.

In addition, in the wireless power system 10, the wireless power transmission apparatus 100 and the wireless power reception apparatus 200 may transmit and receive various information necessary for wireless power transmission. Here, communication between the wireless power transmission apparatus 100 and the wireless power reception apparatus 200 may be performed based on any one method of in-band communication using a magnetic field used for wireless power transmission or out-band communication using a separate communication carrier. Out-band communication may also be referred to as out-of-band communication. Hereinafter, terminology will be unified and described as out-band communication. Examples of out-band communication may include NFC, Bluetooth, Bluetooth low energy (BLE), and the like.

Here, the wireless power transmission apparatus 100 may be provided as a fixed type or a mobile type. Examples of the fixed type include a form embedded in furniture such as a ceiling, a wall, or a table indoors, a form installed as an implant type in an outdoor parking lot, a bus stop, or a subway station, or a form installed in a transportation means such as a vehicle or a train. The mobile wireless power transmission apparatus 100 may be implemented as a part of another apparatus, such as a mobile apparatus having a movable weight or size, a cover of a notebook computer, and the like.

In addition, the wireless power reception apparatus 200 should be interpreted as a comprehensive concept including various electronic devices having a battery and various home appliance devices driven by receiving power wirelessly instead of a power cable. Representative examples of the wireless power reception apparatus 200 include a portable terminal, a cellular phone, a smart phone, a Personal Digital Assistant (PDA), a Portable Media Player (PMP), a Wibro terminal, a tablet, a phablet, a notebook, a digital camera, a navigation terminal, a television, an Electronic Vehicle (EV), and the like.

FIG. 2 is a block diagram of a wireless power system 10 based on another embodiment.

Referring to FIG. 2, the wireless power reception apparatus 200 in the wireless power system 10 may be one or a plurality. In FIG. 1, it is represented that the wireless power transmission apparatus 100 and the wireless power reception apparatus 200 exchange power one-to-one, but as shown in FIG. 2, it is also possible for one wireless power transmission apparatus 100 to transfer power to a plurality of wireless power reception apparatuses 200-1, 200-2,..., 200-M. In particular, when performing wireless power transmission by a magnetic resonance method, one wireless power transmission apparatus 100 may apply a simultaneous transmission method or a time division transmission method to simultaneously transfer power to multiple wireless power reception apparatuses 200-1, 200-2,..., 200-M.

In addition, although FIG. 1 illustrates a state in which the wireless power transmission apparatus 100 directly transfers power to the wireless power reception apparatus 200, a separate wireless power transmission and reception apparatus such as a relay or a repeater for increasing a wireless power transmission distance may be provided between the wireless power transmission apparatus 100 and the wireless power reception apparatus 200. In this case, power is transferred from the wireless power transmission apparatus 100 to the wireless power transmission and reception apparatus, and the wireless power transmission and reception apparatus may transfer power again to the wireless power reception apparatus 200.

Hereinafter, a wireless power receiver, a power receiver, and a receiver mentioned in the present specification refer to the wireless power reception apparatus 200. In addition, a wireless power transmitter, a power transmitter, and a transmitter mentioned in the present specification refer to the wireless power reception transmission apparatus 100.

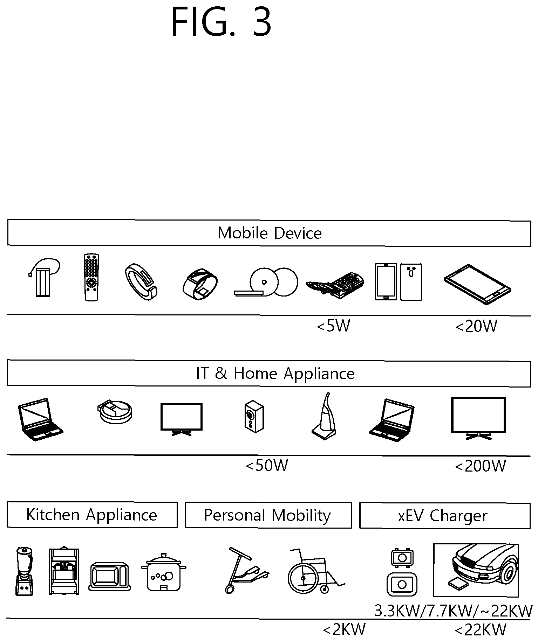

FIG. 3 illustrates an embodiment of various electronic devices into which a wireless power transmission system is introduced.

FIG. 3 classifies and illustrates electronic devices based on an amount of power transmitted and received in a wireless power transmission system. Referring to FIG. 3a, a small power (about 5W or less or about 20W or less) wireless charging method may be applied to wearable devices such as a Smart watch, a Smart Glass, a Head Mounted Display (HMD), and a Smart ring, and mobile electronic devices (or portable electronic devices) such as an earphone, a remote controller, a smartphone, a PDA, a tablet PC, and the like.

A medium power (about 50W or less or about 200W or less) wireless charging method may be applied to medium/small home appliance devices such as a notebook, a robot cleaner, a TV, an audio device, a cleaner, and a monitor. A high power (about 2kW or less or 22kW or less) wireless charging method may be applied to kitchen home appliance devices such as a blender, a microwave oven, and an electric rice cooker, and personal moving devices (or electronic devices/moving means) such as a wheelchair, an electric kickboard, an electric bicycle, and an electric vehicle.

The electronic devices/moving means described above (or illustrated in FIG. 1) may respectively include a wireless power receiver to be described later. Therefore, the electronic devices/moving means described above may be charged by wirelessly receiving power from a wireless power transmitter.

Hereinafter, a mobile device to which a power wireless charging method is applied will be mainly described, but this is only an embodiment, and a wireless charging method based on the present specification may be applied to the various electronic devices described above.

A standard related to wireless power transmission includes a wireless power consortium (WPC), an air fuel alliance (AFA), and a power matters alliance (PMA).

The WPC consists of a Qi ecosystem targeting mobile and wearable devices and an HI ecosystem targeting kitchen devices, robots, light electric vehicles (LEVs), and the like. Various wireless power transmission apparatuses and reception apparatuses using different power levels are covered by standard in each ecosystem, and may be classified into different power classes or categories.

The Qi standard (belong to Qi ecosystem) defines a baseline power profile (BPP), an extended power profile (EPP), and a magnetic power profile. The BPP relates to a wireless power transmission apparatus and a reception apparatus supporting power transmission of 5W, and the EPP and MPP relate to a wireless power transmission apparatus and a reception apparatus supporting power transmission in a range larger than 5W and smaller than 15W. In-band (IB) communication is a mandatory communication protocol of a Qi spec, but out-band (OB) communication used as an optional backup channel may also be used. A wireless power reception apparatus may identify whether OB is supported by setting an OB flag in a configuration packet. A wireless power transmission apparatus supporting OB may enter an OB handover phase by transmitting a bit-pattern for OB handover as a response for the configuration packet. The response for the configuration packet may be a NAK, an ND, or a newly defined 8-bit pattern. An application of a Qi spec includes a smartphone.

The IND standard (belong to HI ecosystem) relates to a wireless power transmission apparatus and a reception apparatus providing guaranteed power of 30W to 150W. IB and OB communication channels may be used for mutual information exchange and power control. An application of an IND spec includes a robot and a power tool.

The LEV standard (belong to HI ecosystem) relates to a wireless power transmission apparatus and a reception apparatus providing guaranteed power of 100W to 500W. IB is a mandatory communication channel for an LEV spec, and OB communication may also be used. IB may be used as initialization to OB and link establishment. As a response to a configuration packet, a wireless power transmission apparatus may enter an OB handover phase using a bit pattern for OB handover.

The Ki standard (belong to HI ecosystem) relates to a wireless power transmission apparatus and a reception apparatus providing guaranteed power of 200W to 2kW, and essentially uses an OB communication channel such as NFC or BLE. Its application includes a kitchen home appliance.

Wireless power transmission and reception apparatuses can provide a very convenient user experience and interface (UX/UI). That is, a smart wireless charging service can be provided, and the smart wireless charging service can be implemented based on a UX/UI of a smartphone including a wireless power transmission apparatus. For such an application, an interface between a processor of a smartphone and a wireless charging reception apparatus allows "drop and play" bidirectional communication between a wireless power transmission apparatus and a reception apparatus.

As an example, a user may experience a smart wireless charging service in a hotel. When a user enters a hotel room and places a smartphone on a wireless charger in the room, the wireless charger transmits wireless power to the smartphone, and the smartphone receives the wireless power. In this process, the wireless charger transmits information related to a smart wireless charging service to the smartphone. When it detects that the smartphone is positioned on the wireless charger, detects reception of wireless power, or when the smartphone receives information related to the smart wireless charging service from the wireless charger, the smartphone enters a state of inquiring a user for opt-in to an additional feature. To this end, the smartphone may display a message on a screen in a manner that includes or does not include an alarm sound. An example of the message may include a phrase such as "Welcome to ### hotel. Select "Yes" to activate smart charging functions : Yes | No Thanks." The smartphone receives a user's input selecting Yes or No Thanks, and performs a next procedure selected by the user. If Yes is selected, the smartphone transmits corresponding information to the wireless charger. And the smartphone and the wireless charger perform a smart charging function together.

The smart wireless charging service may also include receiving auto-filled WiFi credentials. For example, a wireless charger transmits WiFi credentials to a smartphone, and the smartphone executes an appropriate app and automatically inputs WiFi credentials received from the wireless charger.

The smart wireless charging service may also include executing a hotel application providing a hotel promotion, or acquiring remote check-in/check-out and contact information.

As another example, a user may experience a smart wireless charging service in a vehicle. When a user gets in a vehicle and places a smartphone on a wireless charger, the wireless charger transmits wireless power to the smartphone, and the smartphone receives the wireless power. In this process, the wireless charger transmits information related to a smart wireless charging service to the smartphone. When it detects that the smartphone is positioned on the wireless charger, detects reception of wireless power, or when the smartphone receives information related to the smart wireless charging service from the wireless charger, the smartphone enters a state of inquiring a user to check identity.

In this state, the smartphone is automatically connected to a car through WiFi and/or Bluetooth. The smartphone may display a message on a screen in a manner that includes or does not include an alarm sound. An example of the message may include a phrase such as "Welcome to your car. Select "Yes" to synch device with in-car controls : Yes | No Thanks." The smartphone receives a user's input selecting Yes or No Thanks, and performs a next procedure selected by the user. If Yes is selected, the smartphone transmits corresponding information to the wireless charger. And the smartphone and the wireless charger may perform an in-vehicle smart control function together by driving in-vehicle application/display software. A user can enjoy desired music and check a regular map location. In-vehicle application/display software may include a capability to provide synchronization access for passengers.

As another example, a user may experience smart wireless charging indoors. When a user enters a room and places a smartphone on a wireless charger in the room, the wireless charger transmits wireless power to the smartphone, and the smartphone receives the wireless power. In this process, the wireless charger transmits information related to a smart wireless charging service to the smartphone. When it detects that the smartphone is positioned on the wireless charger, detects reception of wireless power, or when the smartphone receives information related to the smart wireless charging service from the wireless charger, the smartphone enters a state of inquiring a user for opt-in to an additional feature. To this end, the smartphone may display a message on a screen in a manner that includes or does not include an alarm sound. An example of the message may include a phrase such as "Hi xxx, Would you like to activate night mode and secure the building?: Yes | No Thanks." The smartphone receives a user's input selecting Yes or No Thanks, and performs a next procedure selected by the user. If Yes is selected, the smartphone transmits corresponding information to the wireless charger. The smartphone and the wireless charger may at least recognize a pattern of the user and advise the user to lock doors and windows, turn off lights, or set an alarm.

Hereinafter, a 'profile' will be newly defined as an index/standard representing/indicating compatibility. That is, compatibility is maintained between wireless power transmission and reception apparatuses having the same 'profile', enabling stable power transmission and reception, and it may be interpreted that power transmission and reception is not possible between wireless power transmission and reception apparatuses having different 'profiles'. A profile may be defined based on an application and/or whether it is compatible regardless of (or independently of) an ecosystem.

Profiles can be largely divided into four types: i) Mobile, ii) Robot, iii) Kitchen, and iv) LEV.

In a case of a 'Mobile' profile, Qi spec, communication protocol/method is IB and OB, operating frequency can be defined as 87 to 205 kHz, 300 to 400 kHz, and an example of an application can be a smartphone, a laptop, a wearable, and the like.

In a case of a 'Robot' profile, IND spec, communication protocol/method is IB and OB, and an example of an application can be a robot, a power tool, and the like.

In a case of a 'Kitchen' profile, Ki spec, communication protocol/method is NFC or BLE-based, operating frequency can be defined as less than 100 kHz, and an example of an application can be a kitchen/home appliance device, and the like.

In a case of an 'LEV' profile, LEV spec, communication protocol/method is IB and OB, and an example of an application can be an electric bicycle, an electric kickboard, and the like.

Between a wireless power transmission apparatus and a reception apparatus of the profile above, NFC or BLE communication may be used as an OB communication channel. In a case of using NFC, a wireless power transmission apparatus and a reception apparatus can confirm that they are NFC devices with each other by exchanging a WPC NFC Data Exchange Profile Format (NDEF).

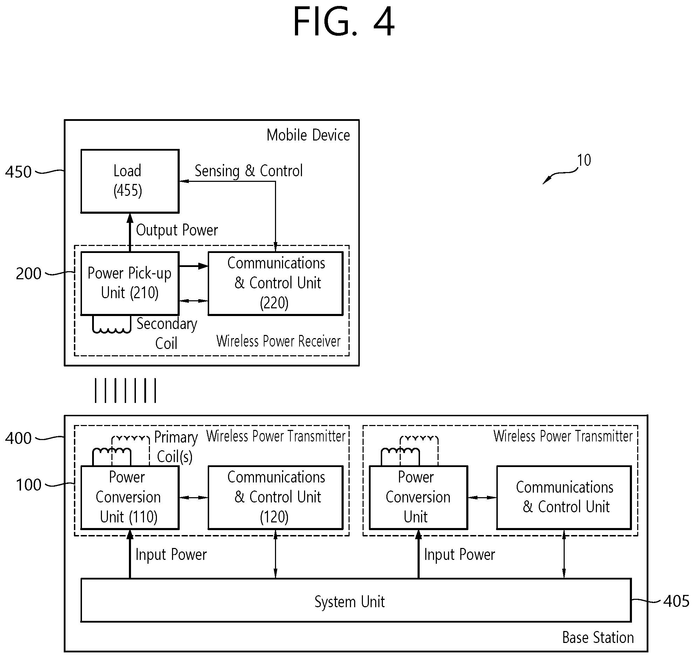

FIG. 4 is a block diagram of a wireless power transmission system based on an embodiment.

Referring to FIG. 4, a wireless power transmission system 10 includes a Mobile Device 450 receiving power wirelessly and a Base Station 400 transmitting power wirelessly.

The Base Station 400 is an apparatus providing inductive power or resonance power, and may include at least one power transmitter 100 and a system circuit 405. The power transmitter 100 transmits inductive power or resonance power and may control transmission. The power transmitter 100 may include a power conversion circuit 110 converting electrical energy into a power signal by generating a magnetic field through primary coil(s) and a communications & control circuit 120 controlling communication and power transfer with a wireless power reception apparatus 200 to transfer power at an appropriate level. The system circuit 405 may perform other operation control of the Base Station 400 such as input power provisioning, control of a plurality of wireless power transmission apparatuses, and user interface control.

A primary coil may generate an electromagnetic field using AC power (or a voltage or a current). The primary coil receives AC power (or a voltage or a current) of a specific frequency output from the power conversion circuit 110, and accordingly may generate a magnetic field of a specific frequency. A magnetic field may be generated in a non-radial or radial manner, and the wireless power reception apparatus 200 generates a current by receiving it. In other words, a primary coil transmits power wirelessly.

In a magnetic induction method, a primary coil and a secondary coil may have any suitable shapes, for example, they may be a copper wire wound around a formation of high permeability such as ferrite or amorphous metal. A primary coil may also be referred to as a transmitting coil, a primary core, a primary winding, a primary loop antenna, and the like. Meanwhile, a secondary coil may also be referred to as a receiving coil, a secondary core, a secondary winding, a secondary loop antenna, a pickup antenna, and the like.

When using a magnetic resonance method, a primary coil and a secondary coil may be provided in a form of a primary resonance antenna and a secondary resonance antenna, respectively. A resonance antenna may have a resonance structure including a coil and a capacitor. At this time, a resonance frequency of a resonance antenna is determined by an inductance of a coil and a capacitance of a capacitor. Here, a coil may be formed in a shape of a loop. In addition, a core may be disposed inside a loop. A core may include a physical core such as a ferrite core or an air core.

Energy transmission between a primary resonance antenna and a secondary resonance antenna may be made through a resonance phenomenon of a magnetic field. The resonance phenomenon means a phenomenon in which when a near field corresponding to a resonance frequency is generated in one resonance antenna, if another resonance antenna is located nearby, both resonance antennas are coupled to each other and high-efficiency energy transfer occurs between the resonance antennas. When a magnetic field corresponding to a resonance frequency is generated between a primary resonance antenna and a secondary resonance antenna, a phenomenon in which the primary resonance antenna and the secondary resonance antenna resonate with each other occurs, and accordingly, generally, a magnetic field is focused toward a secondary resonance antenna with higher efficiency compared to a case where a magnetic field generated in a primary resonance antenna is radiated into a free space, and therefore energy can be transferred from a primary resonance antenna to a secondary resonance antenna with high efficiency. A magnetic induction method can be implemented similarly to a magnetic resonance method, but at this time, a frequency of a magnetic field does not need to be a resonance frequency. Instead, in a magnetic induction method, matching between loops configuring a primary coil and a secondary coil is necessary, and an interval between loops should be very close.

Although not illustrated in the drawings, the power transmitter 100 may further include a communication antenna. A communication antenna may transmit and receive a communication signal using a communication carrier other than magnetic field communication. For example, a communication antenna can transmit and receive communication signals of Wi-Fi, Bluetooth, Bluetooth LE, ZigBee, NFC, and the like.

The communications & control circuit 120 may transmit and receive information with the wireless power reception apparatus 200. The communications & control circuit 120 may include at least one of an IB communication module or an OB communication module.

An IB communication module may transmit and receive information using a magnetic wave having a specific frequency as a center frequency. For example, the communications & control circuit 120 can perform in-band communication by carrying communication information on an operating frequency of wireless power transmission and transmitting it through a primary coil or receiving an operating frequency carrying information through a primary coil. At this time, it can contain information in a magnetic wave or interpret a magnetic wave containing information using a modulation method such as binary phase shift keying (BPSK), Frequency Shift Keying (FSK), or amplitude shift keying (ASK) and a coding method such as Manchester coding or non-return-to-zero level (NZR-L) coding. If using such IB communication, the communications & control circuit 120 can transmit and receive information up to a distance reaching several meters at a data transmission rate of several kbps.

An OB communication module may perform out-band communication through a communication antenna. For example, the communications & control circuit 120 may be provided as a short-range communication module. Examples of a short-range communication module include communication modules of Wi-Fi, Bluetooth, Bluetooth LE, ZigBee, NFC, and the like.

The communications & control circuit 120 may control an overall operation of the power transmitter 100. The communications & control circuit 120 can perform calculation and processing of various information, and control each component of the power transmitter 100.

The communications & control circuit 120 may be implemented as a computer or an apparatus similar thereto using hardware, software, or a combination thereof. In terms of hardware, the communications & control circuit 120 may be provided in a form of an electronic circuit performing a control function by processing an electrical signal, and in terms of software, it may be provided in a form of a program driving the hardware communications & control circuit 120.

The communications & control circuit 120 may control transmission power by controlling an operating point. A controlling operating point may correspond to a combination of a frequency (or a phase), a duty cycle, a duty ratio, and a voltage amplitude. The communications & control circuit 120 can control transmission power by adjusting at least one of a frequency (or a phase), a duty cycle, a duty ratio, and a voltage amplitude. In addition, the power transmitter 100 supplies constant power, and the wireless power reception apparatus 200 can also control reception power by controlling a resonance frequency.

Meanwhile, in a WPC Qi system, the power transmitter 100 may be classified, for example, from a viewpoint of the number of primary coils activated for power transmission. At this time, a power transmitter 100 (that is, a power transmitter 100 supporting a BPP protocol) supporting an amount of wireless power transmission of a maximum of 5W may be classified, for example, into type A power transmitters 100 and type B power transmitters 100, and a power transmitter 100 (that is, a power transmitter 100 supporting an MPP or an EPP protocol) supporting an amount of wireless power transmission of 5W or more may be classified, for example, into type MP-A power transmitters 100 and type MP-B power transmitters 100.
- Type A and type MP-A power transmitter 100

There may be one or more primary coils in type A and type MP-A power transmitters 100. Since type A and type MP-A power transmitters 100 activate a single primary coil at a time, a single primary cell matching an activated primary coil may be used.
- Type B and type MP-B power transmitter 100

There may be a primary coil array in type B and type MP-B power transmitters. And, type B and type MP-B power transmitters may enable free positioning. To this end, type B and type MP-B power transmitters can realize a primary cell at another position of an interface surface by activating one or more primary coils in an array.

Additionally, a wireless power transmitter (that is, a wireless power transmitter supporting an MPP protocol) utilizing a magnet and supporting an amount of wireless power transmission of 5W or more can be proposed, and an MPP protocol will be described later.

However, for high-power wireless power transmission for a standard after Qi v2.0, BPP supports power of a maximum of 5W, EPP supports power of more than 5W and 50W or less, and MPP may support power of more than 5W and 50W or less. That is, it can be seen that EPP or MPP supports power of 5 to 50W.

A Mobile Device 450 includes a power receiver 200 receiving wireless power through a Secondary Coil, and a load 455 receiving power received in the power receiver 200, storing it, and supplying it to a device.

The power receiver 200 may include a power pick-up circuit 210 and a communications & control circuit 220. The power pick-up circuit 210 can receive wireless power through a secondary coil and convert it into electrical energy. The power pick-up circuit 210 rectifies an AC signal obtained through a secondary coil and converts it into a DC signal. The communications & control circuit 220 can control transmission and reception of wireless power (power transfer and reception).

A secondary coil can receive wireless power transmitted from a wireless power transmission apparatus 100. A secondary coil can receive power using a magnetic field generated in a primary coil. Here, when a specific frequency is a resonance frequency, a magnetic resonance phenomenon occurs between a primary coil and a secondary coil so that power can be received more efficiently.

Meanwhile, although not illustrated in FIG. 4, the communications & control circuit 220 may further include a communication antenna. A communication antenna may transmit and receive a communication signal using a communication carrier other than magnetic field communication. For example, a communication antenna can transmit and receive communication signals of Wi-Fi, Bluetooth, Bluetooth LE, ZigBee, NFC, and the like.

The communications & control circuit 220 may transmit and receive information with the wireless power transmission apparatus 100. The communications & control circuit 220 may include at least one of an IB communication module or an OB communication module.

An IB communication module may transmit and receive information using a magnetic wave having a specific frequency as a center frequency. For example, the communications & control circuit 220 can perform IB communication by carrying information on a magnetic wave and transmitting it through a secondary coil or receiving a magnetic wave containing information through a secondary coil. At this time, it can contain information in a magnetic wave or interpret a magnetic wave containing information using a modulation method such as binary phase shift keying (BPSK), Frequency Shift Keying (FSK), or amplitude shift keying (ASK) and a coding method such as Manchester coding or non-return-to-zero level (NZR-L) coding. If using such IB communication, the communications & control circuit 220 can transmit and receive information up to a distance reaching several meters at a data transmission rate of several kbps.

An OB communication module may perform out-band communication through a communication antenna. For example, the communications & control circuit 220 may be provided as a short-range communication module.

Examples of a short-range communication module include communication modules of Wi-Fi, Bluetooth, Bluetooth LE, ZigBee, NFC, and the like.

The communications & control circuit 220 may control an overall operation of the power receiver 200. The communications & control circuit 220 can perform calculation and processing of various information, and control each component of the power receiver 200.

The communications & control circuit 220 may be implemented as a computer or an apparatus similar thereto using hardware, software, or a combination thereof. In terms of hardware, the communications & control circuit 220 may be provided in a form of an electronic circuit performing a control function by processing an electrical signal, and in terms of software, it may be provided in a form of a program driving the hardware communications & control circuit 220.

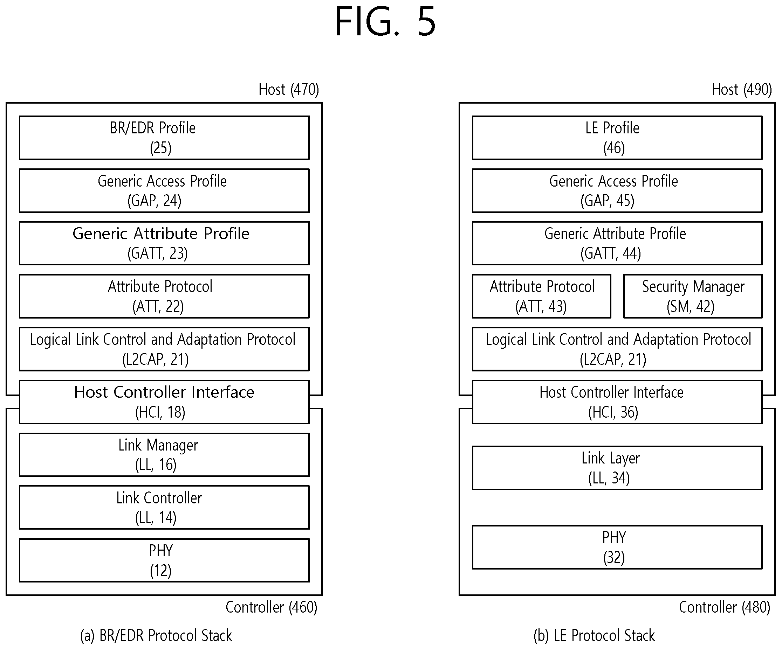

When the communications & control circuit 120 and the communications & control circuit 220 are Bluetooth or Bluetooth LE as an OB communication module or a short-range communication module, the communications & control circuit 120 and the communications & control circuit 220 can be respectively implemented and operated as a communication architecture shown in FIG. 5.

FIG. 5 is a diagram illustrating an example of a Bluetooth communication Architecture to which an embodiment based on the present specification can be applied.

Referring to FIG. 5, (a) of FIG. 5 illustrates an example of a protocol stack of Bluetooth Basic Rate (BR)/Enhanced Data Rate (EDR) supporting GATT, and (b) illustrates an example of a protocol stack of Bluetooth Low Energy (LE).

Specifically, as illustrated in (a) of FIG. 5, a Bluetooth BR/EDR protocol stack may include an upper Controller stack 460 and a lower Host Stack 470 based on a Host Controller Interface (HCI) 18.

The Host Stack (or host module) 470 refers to a wireless transmission and reception module receiving a 2.4 GHz Bluetooth signal and hardware for transmitting or receiving a Bluetooth packet, and the Controller stack 460 is connected to a Bluetooth module to control a Bluetooth module and perform an operation.

The Host Stack 470 may include a BR/EDR PHY layer 12, a BR/EDR Baseband layer 14, and a Link Manager layer 16.

The BR/EDR PHY layer 12 is a layer transmitting and receiving a 2.4 GHz wireless signal, and when using Gaussian Frequency Shift Keying (GFSK) modulation, it can transmit data by hopping 79 RF channels.

The BR/EDR Baseband layer 14 is in charge of a role of transmitting a Digital Signal, selects a channel sequence hopping 1400 times per second, and transmits a time slot of 625us length for each channel.

The Link Manager layer 16 controls an overall operation (link setup, control, security) of Bluetooth Connection by utilizing a Link Manager Protocol (LMP).

The Link Manager layer 16 may perform functions as follows.
- Performs ACL/SCO logical transport, logical link setup, and control.
- Detach: stops a connection and informs a counterpart device of a reason for stopping.
- Performs Power control and Role switch.
- Performs Security (authentication, pairing, encryption) functions.

The Host Controller Interface layer 18 provides an interface between a Host module and a Controller module so that a Host provides a command and Data to a Controller, and allows a Controller to provide an event and Data to a Host.

The Host Stack (or host module) 20 includes a logical link control and adaptation protocol (L2CAP, 21), an attribute Protocol 22, a Generic Attribute Profile (GATT, 23), a Generic Access Profile (GAP, 24), and a BR/EDR profile 25.

The logical link control and adaptation protocol (L2CAP, 21) may provide one bidirectional channel for transmitting data to a specific protocol or profile.

The L2CAP 21 may multiplex various protocols, profiles, and the like provided in an upper level of Bluetooth.

In L2CAP of Bluetooth BR/EDR, a dynamic channel is used, a protocol service multiplexer, retransmission, and a streaming mode are supported, and Segmentation and reassembly, per-channel flow control, and error control are provided.

The Generic Attribute Profile (GATT, 23) may be operable as a protocol describing how the attribute Protocol 22 is used when configuring services. For example, the Generic Attribute Profile 23 may be operable to define how ATT attributes are grouped together into services, and may be operable to describe features associated with services.

Therefore, the Generic Attribute Profile 23 and the attribute Protocol (ATT, 22) may use features to describe states and services of a device, and describe how features relate to each other and how they are used.

The attribute Protocol 22 and the BR/EDR profile 25 define a profile utilizing Bluetooth BR/EDR and an application protocol for exchanging these data, and the Generic Access Profile (GAP, 24) defines device discovery, connection, and security level.

As illustrated in (b) of FIG. 5, a Bluetooth LE protocol stack includes a Controller stack 480 operable to process a radio interface where timing is critical, and a Host stack 490 operable to process high level data.

First, the Controller stack 480 may be implemented using a communication module that may include a Bluetooth radio, for example, a processor module that may include a processing device such as a microprocessor.

The Host stack 490 may be implemented as a part of an OS operating on a processor module, or as instantiation of a package above an OS.

In some instances, a Controller stack and a Host stack may be operated or executed on the same processing device within a processor module.

The Controller stack 480 includes a Physical Layer (PHY, 32), a Link Layer 34, and a Host Controller Interface 36.

The Physical Layer (PHY, wireless transmission and reception module, 32) is a layer transmitting and receiving a 2.4 GHz wireless signal, and uses Gaussian Frequency Shift Keying (GFSK) modulation and a frequency hopping scheme consisting of 40 RF channels.

The Link Layer 34, which serves to transmit or receive a Bluetooth packet, creates a connection between devices after performing Advertising and Scanning functions using 3 Advertising channels, and provides a function of exchanging a data packet of a maximum of 257 bytes through 37 Data channels.

The Host stack may include a Generic Access Profile (GAP, 40), a Logical Link Control and Adaptation Protocol (L2CAP, 41), a Security Manager (SM, 42), an Attribute Protocol (ATT, 440), a Generic Attribute Profile (GATT, 44), a Generic Access Profile 25, and an LT profile 46. However, the Host stack 490 is not limited to this and may include various protocols and profiles.

A Host stack multiplexes various protocols, profiles, and the like provided in an upper level of Bluetooth using L2CAP.

First, the Logical Link Control and Adaptation Protocol (L2CAP, 41) may provide one bidirectional channel for transmitting data to a specific protocol or profile.

The L2CAP 41 may be operable to multiplex data among upper layer protocols, segment and reassemble packages, and manage multicast data transmission.

In Bluetooth LE, 3 fixed channels (1 for signaling CH, 1 for Security Manager, 1 for Attribute protocol) are basically used. And, a dynamic channel may be used if necessary.

On the other hand, in BR/EDR (Basic Rate/Enhanced Data Rate), a dynamic channel is basically used, and a protocol service multiplexer, retransmission, a streaming mode, and the like are supported.

The SM (Security Manager, 42) is a protocol for authenticating a device and providing key distribution.

The ATT (Attribute Protocol, 43) defines a rule for accessing data of a counterpart device in a Server-Client structure. The ATT includes 6 message types (Request, Response, Command, Notification, Indication, Confirmation) as below.
① Request and Response message: A Request message is a message for requesting and delivering specific information from a client device to a server device, and a Response message is a response message to a Request message, which refers to a message that can be used for transmission from a server device to a client device.
② Command message: It is a message transmitted mainly to instruct a command of a specific operation from a client device to a server device, and a server device does not transmit a response to a Command message to a client device.
③ Notification message: It is a message transmitted for notification such as an event from a server device to a client device, and a client device does not transmit a confirmation message for a Notification message to a server device.
④ Indication and Confirm message: It is a message transmitted for notification such as an event from a server device to a client device, and unlike a Notification message, a client device transmits a Confirm message for an Indication message to a server device.

The present specification allows a client to clearly know a data length by transmitting a value related to a data length when requesting long data in a GATT profile using the Attribute Protocol (ATT, 43), and can receive a Characteristic value transmitted from a server using a UUID.

The Generic Access Profile (GAP, 45) is a layer newly implemented for a Bluetooth LE technology, and is used to control role selection for communication between Bluetooth LE devices, and how multi-profile operation occurs.

In addition, the Generic Access Profile 45 is mainly used for device discovery, connection creation, and a security procedure part, defines a method of providing information to a user, and defines types of attributes as follows.
① Service: Defines a basic operation of a device with a combination of behaviors related to data
② Include: Defines a relationship between services
③ Characteristics: A data value used in a service
④ Behavior: A format readable by a computer defined by a Universal Unique Identifier (UUID, value type)

The LE profile 46 is profiles having dependencies on GATT and is mainly applied to a Bluetooth LE device. The LE profile 46 may be, for example, Battery, Time, FindMe, Proximity, Time, and the like, and specific details of GATT-based Profiles are as follows.
① Battery: Battery information exchange method
② Time: Time information exchange method
③ FindMe: Providing alarm service based on distance
④ Proximity: Battery information exchange method
⑤ Time: Time information exchange method

The Generic Attribute Profile (GATT, 44) may be operable as a protocol describing how the Attribute Protocol 43 is used when configuring services. For example, the Generic Attribute Profile 44 may be operable to define how ATT attributes are grouped together into services, and may be operable to describe features associated with services.

Therefore, the Generic Attribute Profile 44 and the Attribute Protocol (ATT, 43) may use features to describe states and services of a device, and describe how features relate to each other and how they are used.

Hereinafter, Procedures of a Bluetooth Low Energy (BLE) technology will be briefly examined.

A BLE procedure may be divided into a Device Filtering Procedure, an Advertising Procedure, a Scanning Procedure, a Discovering Procedure, a Connecting Procedure, and the like.

### Device Filtering Procedure

A Device Filtering Procedure is a method for reducing a number of devices performing a response to a request, an instruction, a notification, etc. in a Controller stack.

Since it is unnecessary to respond to this when a request is received in all devices, a Controller stack can control to reduce power consumption in a BLE Controller stack by reducing a number of transmitted requests.

An advertising device or a scanning device may perform the Device Filtering Procedure to limit a device receiving an advertising packet, a scan request, or a connection request.

Here, an advertising device refers to a device transmitting an advertising event, that is, performing advertising, and is also expressed as an Advertiser.

A scanning device refers to a device performing scanning, a device transmitting a scan request.

In BLE, when a scanning device receives some advertising packets from an advertising device, the scanning device should transmit a scan request to the advertising device.

However, when a Device Filtering Procedure is used so that scan request transmission is unnecessary, the scanning device may ignore advertising packets transmitted from an advertising device.

A Device Filtering Procedure may also be used in a connection request process. If device filtering is used in a connection request process, it becomes unnecessary to transmit a response to a connection request by ignoring a connection request.

### Advertising Procedure

An advertising device performs an advertising procedure to perform an undirected broadcast to devices within an area.

Here, Undirected Advertising is an advertisement directed to all devices rather than a broadcast directed to a specific device, and all devices can scan Advertising to request additional information or request a connection.

Differently from this, Directed advertising allows only a device designated as a receiving device to scan Advertising to request additional information or request a connection.

An advertising procedure is used to establish a Bluetooth connection with a nearby initiating device.

Alternatively, an advertising procedure may be used to provide periodic broadcast of user data to scanning devices performing listening on an advertising channel.

In an advertising procedure, all advertisements (or advertising events) are broadcast through an advertising physical channel.

Advertising devices may receive a scan request from listening devices performing listening to obtain additional user data from an advertising device. An advertising device transmits a response to a scan request to a device that transmitted a scan request through an advertising physical channel identical to an advertising physical channel that received a scan request.

Broadcast user data sent as a part of advertising packets is dynamic data, whereas scan response data is generally static data.

An advertising device may receive a connection request from an initiating device on an advertising (broadcast) physical channel. If an advertising device used an advertising event capable of connecting, and an initiating device was not filtered by a Device Filtering Procedure, an advertising device stops advertising and enters a connected mode. An advertising device may start advertising again after a connected mode.

### Scanning Procedure

A device performing scanning, that is, a scanning device performs a scanning procedure to listen to an undirected broadcast of user data from advertising devices using an advertising physical channel.

A scanning device transmits a scan request to an advertising device through an advertising physical channel to request additional data from an advertising device. An advertising device transmits a scan response, which is a response to the scan request, including additional data requested by a scanning device through an advertising physical channel.

The scanning procedure may be used while being connected to another BLE device in a BLE piconet.

If a scanning device receives an advertising event being broadcast and is in an initiator mode capable of initiating a connection request, a scanning device may start a Bluetooth connection with an advertising device by transmitting a connection request to an advertising device through an advertising physical channel.

When a scanning device transmits a connection request to an advertising device, a scanning device stops scanning for an initiator mode for additional broadcast and enters a connected mode.

### Discovering Procedure

Devices capable of Bluetooth communication (hereinafter, referred to as 'Bluetooth devices') perform an advertising procedure and a scanning procedure to discover devices existing nearby or to be discovered by other devices within a given area.

A discovering procedure is performed asymmetrically. A Bluetooth device trying to find another device nearby is called a discovering device, and listens to find devices advertising a scannable advertising event. A Bluetooth device discovered and available by another device is called a discoverable device, and actively broadcasts an advertising event so that another device can scan through an advertising (broadcast) physical channel.

Both a discovering device and a discoverable device may already be connected to other Bluetooth devices in a piconet.

### Connecting Procedure

A connecting procedure is asymmetrical, and a connecting procedure requires that while a specific Bluetooth device performs an advertising procedure, another Bluetooth device performs a scanning procedure.

That is, an advertising procedure can be a purpose, and as a result, only one device will respond to an advertisement. After receiving a connectable advertising event from an advertising device, a connection can be initiated by transmitting a connection request to an advertising device through an advertising (broadcast) physical channel.

Next, operating states in a BLE technology, that is, an Advertising State, a Scanning State, an Initiating State, and a connection state will be briefly examined.

### Advertising State

A Link Layer (LL) enters an advertising state by an instruction of a Host (stack). When a Link Layer is in an advertising state, a Link Layer transmits Advertising Packet Data Circuits (PDUs) in advertising events.

Each advertising event consists of at least one advertising PDUs, and advertising PDUs are transmitted through advertising channel indexes being used. An advertising event is terminated when an advertising PDU is transmitted through advertising channel indexes being used respectively, or an advertising event can be terminated earlier when an advertising device needs to secure a space for performing another function.

### Scanning State

A Link Layer enters a scanning state by an instruction of a Host (stack). In a scanning state, a Link Layer listens to advertising channel indexes.

There are two types in a scanning state, passive scanning and active scanning, and each scanning type is determined by a Host.

A separate time or advertising channel index for performing scanning is not defined.

During a scanning state, a Link Layer listens to an advertising channel index during a scanWindow duration. A scanInterval is defined as an interval (interval) between start points of two consecutive scan windows.

A Link Layer should listen for completion of all scanIntervals of a scanWindow as instructed by a Host when there is no conflict in scheduling. In each scanWindow, a Link Layer should scan another advertising channel index. A Link Layer uses all available advertising channel indexes.

In passive scanning, a Link Layer only receives packets and cannot transmit any packets.

In active scanning, a Link Layer performs listening to depend on advertising PDU types capable of requesting advertising PDUs and additional information related to an advertising device to an advertising device.

### Initiating State

A Link Layer enters an initiating state by an instruction of a Host (stack).

When a Link Layer is in an initiating state, a Link Layer performs listening to advertising channel indexes.

During an initiating state, a Link Layer listens to an advertising channel index during a scanWindow duration.

### Connection state

A Link Layer enters a connected state when a device performing a connection request, that is, an initiating device transmits a CONNECT_REQ PDU to an advertising device, or when an advertising device receives a CONNECT_REQ PDU from an initiating device.

After entering a connected state, a connection is considered to be created. However, a connection does not need to be considered to be established at a time point of entering a connected state. An only difference between a newly created connection and a pre-established connection is a Link Layer connection supervision timeout value.

When two devices are connected, two devices act in different roles.

A Link Layer performing a role of a master is called a master, and a Link Layer performing a role of a slave is called a slave. A master adjusts a timing of a connection event, and a connection event refers to a time point synchronized between a master and a slave.

Hereinafter, a packet defined in a Bluetooth interface will be briefly examined. BLE devices use packets defined below.

### Packet Format

A Link Layer has only one packet format used for both an advertising channel packet and a data channel packet.

Each packet consists of 4 fields: a Preamble, an Access Address, a PDU, and a CRC.

When one packet is transmitted in an advertising channel, a PDU will be an advertising channel PDU, and when one packet is transmitted in a data channel, a PDU will be a data channel PDU.

### Advertising Channel PDU

An Advertising Channel Packet Data Circuit (PDU) has a 16-bit header and payloads of various sizes.

A PDU type field of an advertising channel PDU included in a header represents a PDU type as defined in Table 1 below.

**[Table 1]**

| **PDU Type** | **Packet Name** |
|---|---|
| 0000 | ADV_IND |
| 0001 | ADV_DIRECT_IND |
| 0010 | ADV_NONCONN_IND |
| 0011 | SCAN_REQ |
| 0100 | SCAN_RSP |
| 0101 | CONNECT_REQ |
| 0110 | ADV_SCAN_IND |
| 0111-1111 | Reserved |

### Advertising PDU

The advertising channel PDU types below are called advertising PDUs and are used in a specific event.
ADV_IND: Connectable undirected advertising event
ADV_DIRECT_IND: Connectable directed advertising event
ADV_NONCONN_IND: Non-connectable undirected advertising event
ADV_SCAN_IND: Scannable undirected advertising event

The PDUs are transmitted in a Link Layer in an advertising state, and are received by the Link Layer in a scanning state or an Initiating State.

### Scanning PDU

The advertising channel PDU type below is called a scanning PDU, and is used in a state described below.

SCAN_REQ: Transmitted by the Link Layer in the scanning state, and received by the Link Layer in the advertising state.

SCAN_RSP: Transmitted by the Link Layer in the advertising state, and received by the Link Layer in the scanning state.

### Initiating PDU

The advertising channel PDU type below is called an initiating PDU.

CONNECT_REQ: Transmitted by the Link Layer in the initiating state, and received by the Link Layer in the advertising state.

### Data Channel PDU

The data channel PDU has a 16-bit header, payloads of various sizes, and may include a Message Integrity Check (MIC) field.

A procedure, a state, a packet format, and the like in a BLE technology examined above may be applied to perform methods proposed in the present specification.

Referring to FIG. 4 again, a load 455 may be a battery. The battery may store energy using power output from a power pick-up circuit 210. Meanwhile, the battery does not necessarily have to be included in a mobile device 450. For example, the battery may be provided as an external configuration of a detachable form. For another example, the wireless power reception apparatus 200 may include a driving means driving various operations of an electronic device instead of the battery.

The mobile device 450 is illustrated as including the wireless power reception apparatus 200, and a base station 400 is illustrated as including the wireless power transmission apparatus 100, but in a broad sense, the wireless power reception apparatus 200 may be equated with the mobile device 450, and the wireless power transmission apparatus 100 may be equated with the base station 400.

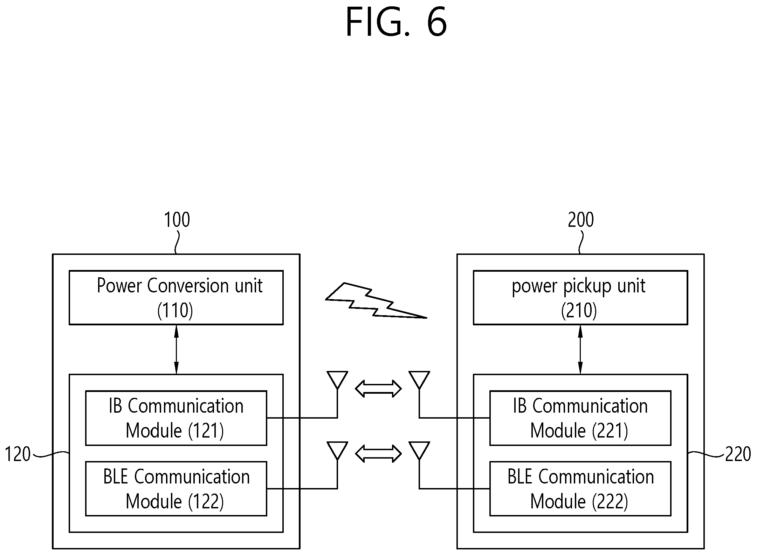

When a communications & control circuit 120 and a communications & control circuit 220 include Bluetooth or Bluetooth LE as an OB communication module or a short-range communication module in addition to an IB communication module, the wireless power transmission apparatus 100 including the communications & control circuit 120 and the wireless power reception apparatus 200 including the communications & control circuit 220 may be expressed as a simplified block diagram as shown in FIG. 6.

FIG. 6 is a block diagram illustrating a wireless power transmission system using BLE communication based on an example.

Referring to FIG. 6, the wireless power transmission apparatus 100 includes a power conversion circuit 110 and a communications & control circuit 120. The communications & control circuit 120 includes an in-band communication module 121 and a BLE communication module 122.

Meanwhile, the wireless power reception apparatus 200 includes a power pick-up circuit 210 and a communications & control circuit 220. The communications & control circuit 220 includes an in-band communication module 221 and a BLE communication module 222.

In one aspect, the BLE communication modules 122 and 222 perform an architecture and an operation based on FIG. 5. For example, the BLE communication modules 122 and 222 may be used to establish a connection between the wireless power transmission apparatus 100 and the wireless power reception apparatus 200, and exchange control information and packets necessary for wireless power transmission.

In another aspect, the communications & control circuit 120 may be configured to operate a profile for wireless charging. Here, the profile for wireless charging may be a GATT using BLE transmission.

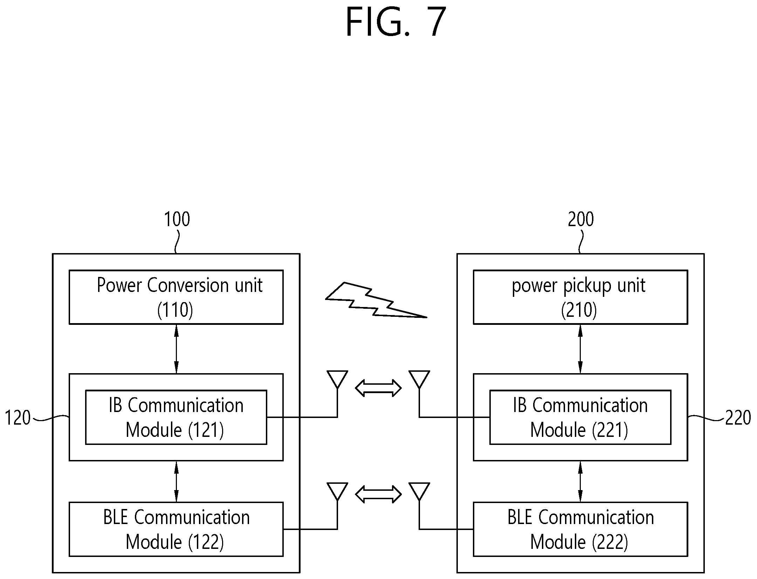

FIG. 7 is a block diagram illustrating a wireless power transmission system using BLE communication based on another example.

Referring to FIG. 7, the communications & control circuits 120 and 220 respectively include only the in-band communication modules 121 and 221, and a form in which the BLE communication modules 122 and 222 are provided separately from the communications & control circuits 120 and 220 is also possible.

Hereinafter, a coil or a coil part may be referred to as a coil assembly, a coil cell, or a cell, including a coil and at least one element close to the coil.

Meanwhile, when a user arranges the wireless power receiver 200 within an operating volume of the wireless power transmitter 100, both the wireless power transmitter 100 and the wireless power receiver 200 start communication for a purpose of configuring and controlling power transmission. At this time, a power signal may provide a carrier for all communication, and a protocol related to communication may be configured in several steps/phases. Hereinafter, the protocol related to communication will be described.

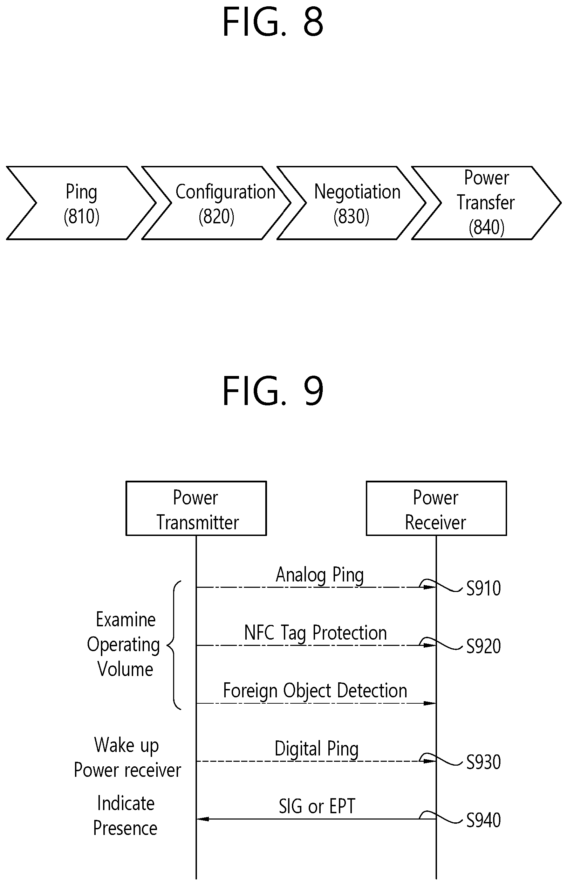

FIG. 8 is a state transition diagram for explaining a wireless power transmission procedure.

In the WPC, two communication protocols may be defined.
- Baseline protocol (or BPP): may mean an original protocol supporting only one-way communication from the wireless power receiver 200 to the wireless power transmitter 100.
- Extended protocol (or EPP): supports bidirectional communication and an enhanced foreign object detection (FOD) function, and may also support a data transmission stream function and an authentication option.

Referring to FIG. 8, a power transfer operation between the wireless power transmitter 100 and the wireless power receiver 200 based on an embodiment of the present specification may be largely divided into a Ping Phase 810, a Configuration Phase 820, a Negotiation Phase 830, and a Power Transfer Phase.
- Ping Phase 810

In the Ping Phase 810, the wireless power transmitter 100 may try to establish communication with the wireless power receiver 200. Before trying to establish the communication, a measurement may be performed, and based on the measurement, it may be checked whether there is an object such as a bank card, a coin, or other metal that may be damaged or heated during power transmission. Here, such a measurement may proceed without waking up the wireless power receiver 200.

Here, the wireless power transmitter 100 may postpone a conclusion related to whether the detected metal is a foreign object or a friendly metal to the Negotiation Phase 830 after obtaining design information from the wireless power receiver 200.

### Configuration Phase 820

In the Configuration Phase 820, the wireless power receiver 200 may send basic identification and configuration data to the wireless power receiver 200. And, both sides of the wireless power transmitter 100 and the wireless power receiver 200 may generate a baseline power transfer contract using this information.

Also, the wireless power transmitter 100 and the wireless power receiver 200 may determine whether to continue a Baseline Protocol or an Extended Protocol in the Configuration Phase 820.

Here, the wireless power receiver 200 may use a function such as enhanced FOD, a data transmission stream, and authentication only when implementing the extended protocol.
- Negotiation Phase 830

In the Negotiation Phase 830, the wireless power transmitter 100 and the wireless power receiver 200 may establish an extended power transfer contract including an additional setting and limit. Also, the wireless power receiver 200 may provide design information to the wireless power transmitter 100. Later, the design information may be used to complete FOD before transitioning to the Power Transfer Phase 840.

Here, the Negotiation Phase 830 may correspond to a phase not existing in the baseline protocol.
- Power Transfer Phase 840

The Power Transfer Phase 840 may be a phase in which power is transferred to a load of the wireless power receiver 200.

In the extended protocol, the wireless power transmitter 100 and the wireless power receiver 200 may perform system calibration when this phase starts. This phase may be occasionally interrupted to renegotiate an element of a power transfer contract. However, power transfer may continue even during such renegotiation.

Hereinafter, a protocol related to the Ping Phase 810, the Configuration Phase 820, the Negotiation Phase 830, and the Power Transfer Phase 840 described above will be respectively described in more detail.

### 1. Ping Phase 810

When the Ping Phase 810 starts, the wireless power transmitter 100 does not yet know whether the wireless power receiver 200 is within an operating volume. In addition, the wireless power transmitter 100 cannot recognize the wireless power receiver 200. As for the reason, it is because this system is generally deactivated due to a lack of a power signal.

In this situation, before the wireless power transmitter 100 starts a digital ping for requesting a response from the wireless power receiver 200, the wireless power transmitter 100 may go through the following step/phase.

FIG. 9 schematically illustrates an example related to a protocol of the Ping Phase 810.

Based on FIG. 9, the wireless power transmitter 100 may perform an analog ping (S910). That is, the wireless power transmitter 100 may transmit the analog ping to check whether an object exists within an operating volume. For example, the wireless power transmitter may detect whether the object exists within the operating volume based on a change in current of a transmitting coil or a Primary Coil.

The wireless power transmitter 100 may apply Near Field Communication (NFC) tag protection (S920). Here, the NFC tag protection may be performed through a procedure as follows.
a) First, it may be checked whether one or more of detected objects include an NFC tag.
b) Afterwards, in case of an object including the NFC tag, it may be checked whether it can withstand a power signal without damage.
c) If the wireless power transmitter 100 determines that the NFC tag cannot withstand the power signal, it maintains a ping phase without starting the digital ping, and the wireless power transmitter 100 may inform a user of a reason for being unable to continue to proceed.

The wireless power transmitter 100 may perform foreign object detection (S930). That is, the wireless power transmitter 100 may collect information helpful for determining whether there is a foreign object other than the wireless power receiver 200. For this, the wireless power transmitter 100 may use a various method such as a pre-power FOD method, etc.

Meanwhile, in the three phase S910, S920, and S930 described above, the wireless power receiver may not operate.

If the wireless power transmitter 100 performs the above phase and determines that the wireless power receiver 200 is potentially in the operating volume, the wireless power transmitter 100 may start the digital ping (S940). Here, the digital ping may request a response such as a signal strength (SIG) data packet or an End Power Transfer (EPT) data packet to the wireless power receiver 200.

Afterwards, the wireless power transmitter 100 may receive the SIG or EPT from the wireless power receiver 200 (S950). Here, the SIG data packet may provide a measurement of coupling, and the SIG data packet may include information related to a signal strength value. In addition, the EPT data packet may provide a request to stop power transmission and a reason for the request.

If the wireless power transmitter 100 fails to receive the above response from the wireless power receiver 200, the wireless power transmitter 100 may repeat the above phases while staying in the Ping Phase 810.

### 2. Configuration Phase 820

The Configuration Phase 820 is a part of a protocol as follows.
- The wireless power receiver 200 may identify itself to the wireless power transmitter 100.
- The wireless power receiver 200 and the wireless power transmitter 100 may establish a baseline power transfer contract.
- The wireless power receiver 200 and the wireless power transmitter 100 may determine a protocol variation to use for power transmission.

In the Configuration Phase 820, the wireless power transmitter 100 and the wireless power receiver 200 may continue to operate using a digital ping parameter. This may mean that a power and current level of both the wireless power transmitter 100 and the wireless power receiver 200 is changed only when the user moves the wireless power receiver 200 at a position within the operating volume.

Hereinafter, the protocol in the Configuration Phase 820 will be described in more detail.

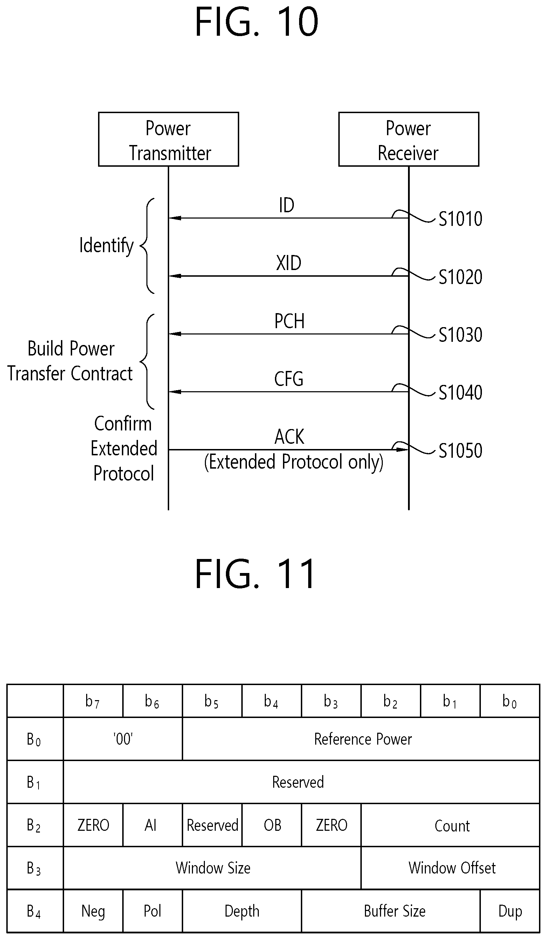

FIG. 10 schematically illustrates an example related to the protocol of the Configuration Phase 820.

Based on FIG. 10, the wireless power transmitter 100 may receive an identification (ID) from the wireless power receiver 200 (S1010). Alternatively, the wireless power transmitter 100 may also receive an extended identification (XID) from the wireless power receiver 200 (S1020). That is, the wireless power receiver 200 may identify the wireless power receiver 200 itself using an ID data packet and optionally an XID data packet.

The wireless power transmitter 100 may optionally receive a power control hold-off (PCH) data packet from the wireless power receiver 200 (S1030), and the wireless power transmitter 100 may receive a CFG data packet from the wireless power receiver 200 (S1040). That is, the wireless power receiver 200 may provide data for use in the power transfer contract using the PCH and/or CFG data packet.

Lastly, the wireless power transmitter 100 may check the extended protocol if possible (S1050).

Summarizing each data packet described above may be as follows.
- ID: The ID data packet may be information identifying the wireless power receiver 200. Here, the ID may include a manufacturer code, a basic device identifier, and the like. In addition, the ID may also include information identifying a presence or absence of the XID data packet in a setup phase.
- XID: The XID data packet may include additional identification data.
- PCH: The PCH data packet may configure a delay between reception of a control error (CE) data packet and the wireless power transmitter 100 starting a coil current adjustment.
- CFG: The CFG data packet may provide basic configuration data.

For example, the CFG data packet may provide all parameters governing power transmission in a baseline protocol. In addition, the CFG data packet may provide all FSK communication parameters used in an extended protocol. Also, the CFG data packet may provide an additional function of the wireless power receiver 200.

FIG. 11 is a diagram illustrating a message field of a configuration packet (CFG) of a wireless power reception apparatus based on an embodiment.

Based on FIG. 11, the configuration packet (CFG) based on an embodiment may have a header value of 0x51, and the message field of the configuration packet (CFG) may include an authentication (AI) flag of 1 bit and an out-band (OB) flag of 1 bit.

The authentication flag (AI) indicates whether the wireless power reception apparatus supports an authentication function. For example, if a value of the authentication flag (AI) is '1', it indicates that the wireless power reception apparatus may support the authentication function or operate as an Authentication Initiator, and if the value of the authentication flag (AI) is '0', it may indicate that the wireless power reception apparatus does not support the authentication function or cannot operate as the Authentication Initiator.

The out-band (OB) flag indicates whether the wireless power reception apparatus supports out-band communication. For example, if a value of the out-band (OB) flag is '1', the wireless power reception apparatus indicates the out-band communication, and if the value of the out-band (OB) flag is '0', it may indicate that the wireless power reception apparatus does not support the out-band communication.

Providing the ID and/or XID described above is for identification. And, providing the PCH and/or CFG is for building the power transfer contract.

### 3. Negotiation Phase 830

The Negotiation Phase 830 is a part of the extended protocol in which the wireless power transmitter 100 and the wireless power receiver 200 may change the power transmission contract. In this step/phase, there are two types.
- Negotiation Phase 830: The Negotiation Phase 830 directly follows after the Configuration Phase 820, and serves to generate an initial extended power transmission contract. In addition, the Negotiation Phase 830 also serves to complete a pre-power FOD function. Here, a length of a negotiation phase is not limited.
- Renegotiation Phase: The Renegotiation Phase may interrupt the Power Transfer Phase 840 multiple times, and generally serves to adjust a single element of the power transfer contract. In addition, FOD/qf, FOD/rf, and SRQ/rpr data packets may not be used in a renegotiation phase. A constraint related to the CE data packet in the Power Transfer Phase 840 limits a length of the renegotiation phase.

In the negotiation phase or the renegotiation phase, the Power Transfer Contract related to reception/transmission of wireless power between the wireless power reception apparatus and the wireless power transmission apparatus may be extended or changed, an update of the power transmission contract adjusting at least a part of elements of the power transmission contract may be made, or exchange of information for establishing out-band communication may be made.

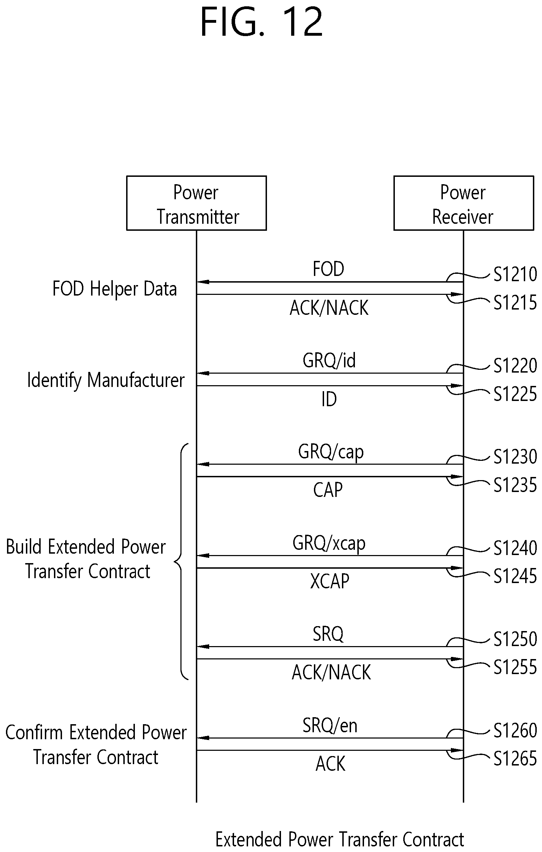

FIG. 12 is a flowchart schematically illustrating a protocol of the negotiation phase or the renegotiation phase based on an embodiment.

Referring to FIG. 12, the wireless power transmitter 100 may receive a FOD status data packet (e.g., FOD) from the wireless power receiver 200 (S1210). Here, the wireless power receiver 200 may inform the wireless power transmitter 100 of an effect that its presence has on a selected property of a reference wireless power transmitter 100 using the FOD status data packet. And, the wireless power transmitter 100 may configure the FOD function using this information.

The wireless power transmitter 100 may transmit an ACK/NAK for the above FOD status data packet to the wireless power receiver 200 (S1215).

Meanwhile, the wireless power receiver 200 may receive an Identification data packet (ID), a Capabilities data packet (CAP), and an extended CAP (XCAP) of the wireless power transmitter 100 using a General Request data packet (GRQ).

The general request packet (GRQ) may have a header value of 0x07, and may include a message field of 1 byte. The message field of the general request packet (GRQ) may include a header value of a data packet that the wireless power receiver 200 requests to the wireless power transmitter 100 using the GRQ packet.

For example, in the negotiation phase or the renegotiation phase, the wireless power receiver 200 may transmit the GRQ packet (GRQ/id) requesting the ID packet of the wireless power transmitter 100 to the wireless power transmitter 100 (S1220).

The wireless power transmitter 100 receiving the GRQ/id may transmit the ID packet to the wireless power receiver 200 (S1225). The ID packet of the wireless power transmitter 100 includes information related to a 'Manufacturer Code'. The ID packet including the information related to the 'Manufacturer Code' enables identifying a manufacturer of the wireless power transmitter 100.

Alternatively, in the negotiation phase or the renegotiation phase, the wireless power receiver 200 may transmit a GRQ packet (GRQ/cap) requesting a capability packet (CAP) of the wireless power transmitter 100 to the wireless power transmitter 100 (S1230). A message field of the GRQ/cap may include a header value (0x31) of the capability packet (CAP).

The wireless power transmitter 100 receiving the GRQ/cap may transmit the capability packet (CAP) to the wireless power receiver 200 (S1235).

Alternatively, in the negotiation phase or the renegotiation phase, the wireless power receiver 200 may transmit a GRQ packet (GRQ/xcap) requesting the capability packet (CAP) of the wireless power transmitter 100 to the wireless power transmitter 100 (S1240). A message field of the GRQ/xcap may include a header value (0x32) of the capability packet (XCAP).

The wireless power transmitter 100 receiving the GRQ/xcap may transmit the capability packet (XCAP) to the wireless power receiver 200 (S1245).

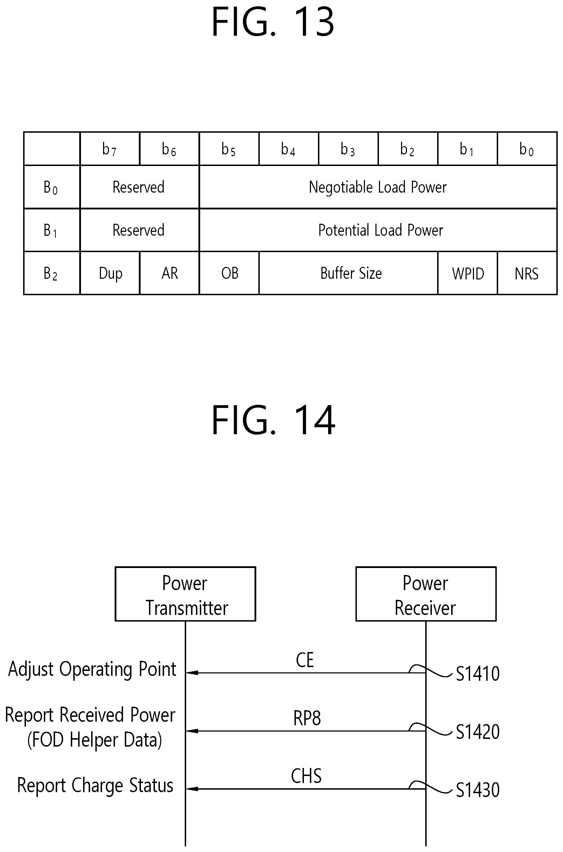

FIG. 13 is a diagram illustrating a message field of a capability packet (CAP) of a wireless power transmission apparatus based on an embodiment.

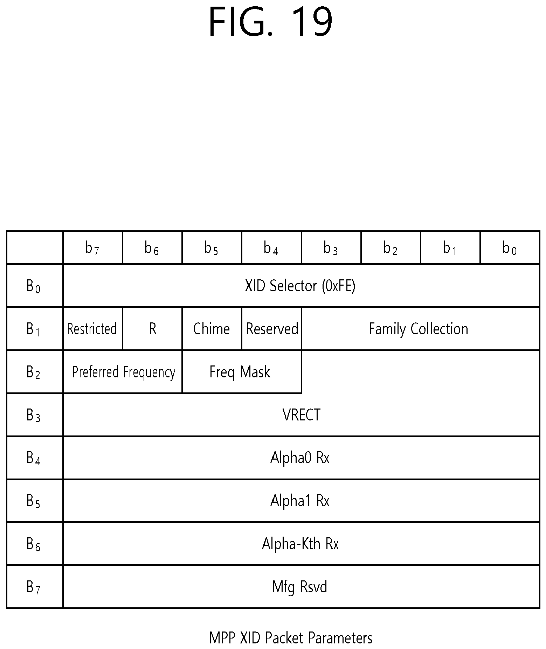

The capability packet (CAP) based on an embodiment may have a header value of 0x31, and referring to FIG. 19, may include a message field of 3 bytes.

Referring to FIG. 13, the message field of the capability packet (CAP) may include an authentication (AR) flag of 1 bit and an out-band (OB) flag of 1 bit.

The authentication flag (AR) indicates whether the wireless power transmitter 100 supports an authentication function. For example, if a value of the authentication flag (AR) is '1', it indicates that the wireless power transmitter 100 may support the authentication function or operate as an Authentication Responder, and if the value of the authentication flag (AR) is '0', it may indicate that the wireless power transmitter 100 does not support the authentication function or cannot operate as the Authentication Responder.

The out-band (OB) flag indicates whether the wireless power transmitter 100 supports out-band communication. For example, if a value of the out-band (OB) flag is '1', the wireless power transmitter 100 indicates the out-band communication, and if the value of the out-band (OB) flag is '0', it may indicate that the wireless power transmitter 100 does not support the out-band communication.

In the negotiation phase, the wireless power receiver 200 may receive the capability packet (CAP) of the wireless power transmitter 100, and check whether an authentication function is supported and whether out-band communication is supported by the wireless power transmitter 100.

Returning to FIG. 12 again, the wireless power receiver 200 may update elements of the Power Transfer Contract related to power to be provided in the Power Transfer Phase using at least one Specific Request data packet (SRQ) in the negotiation phase or the renegotiation phase (S1250), and may receive an ACK/NAK for this (S1255).

Meanwhile, in order to check an extended power transfer contract and terminate the negotiation phase, the wireless power receiver 200 may transmit an SRQ/en to the wireless power transmitter 100 (S1260), and may receive an ACK from the wireless power transmitter 100 (S1265).

### 4. Power Transfer Phase 840

The Power Transfer Phase 840 is a part of the protocol in which actual power is transmitted to a load of the wireless power receiver 200. Here, power transfer may proceed based on a condition of the power transfer contract generated in the Negotiation Phase 830.

### <Power control based on CE>

The wireless power receiver 200 may control a power level by transmitting control error (CE) data measuring a deviation between a target and an actual operating point of the wireless power receiver 200 to the wireless power transmitter 100. The wireless power transmitter 100 and the wireless power receiver 200 aim to make the control error data 0, and at this point, the system operates at a target power level.

### <In-power transfer FOD method>

Besides the control error data, the wireless power transmitter 100 and the wireless power receiver 200 may exchange information for facilitating FOD. The wireless power receiver 200 regularly reports an amount of received power (a received power level) to the wireless power transmitter 100, and the wireless power transmitter 100 may inform the wireless power receiver 200 of whether a foreign object is detected. A method that can be used for the FOD in the power transfer phase may correspond to, for example, a power loss calculation. In this approach, the wireless power transmitter 100 compares the received power level reported by the wireless power receiver 200 with an amount of transmitted power (a transmitted power level), and when a difference exceeds a threshold value, may send a signal (related to whether a foreign object is monitored) to the wireless power receiver 200.

### <Renegotiation Phase>

If necessary based on a situation, the wireless power transmitter 100 or the wireless power receiver 200 may request renegotiation of the power transmission contract during the power transfer phase. Examples of changed situations in which renegotiation of the power transmission contract can be made may be as follows.
- When the wireless power receiver 200 requires (substantially) more power than previously negotiated.
- When the wireless power transmitter 100 detects that it is operating with low efficiency.
- When the wireless power transmitter 100 can no longer maintain a current power level due to an increased operating temperature (or vice versa, that is, when the wireless power receiver 200 can operate at a higher power level after sufficiently cooled).

Here, specific examples of a protocol related to the Renegotiation Phase are as described above.

### <Data transmission stream>

The wireless power transmitter 100 and the wireless power receiver 200 may start a data transmission stream to exchange application-level data throughout the Power Transfer Phase 840.

Here, an important common application is authentication, where both sides can verify credentials of each other in an anti-tamper method. For example, the wireless power receiver 200 may want to verify the credentials of the wireless power transmitter 100 to check whether the wireless power transmitter 100 can be trusted to safely operate at a high power level. Having appropriate credentials may mean having passed a compliance test.

Therefore, the present specification may provide a method of starting power transfer at a low power level, and controlling power to a higher level only after successfully completing an authentication protocol.

### <Protocol in Power Transfer Phase 840>

So far, operations between the wireless power transmitter 100 and the wireless power receiver 200 in the Power Transfer Phase 840 have been schematically described. Hereinafter, for smooth understanding of the operations in the Power Transfer Phase 840, the protocol in the Power Transfer Phase 840 will be respectively described by distinguishing a case of a baseline protocol and a case of an extended protocol.

FIG. 14 schematically illustrates a flowchart of a data flow for the Power Transfer Phase 840 in a baseline protocol.

Based on FIG. 14, the wireless power receiver 200 may transmit a CE to the wireless power transmitter 100 (S1410). Here, the wireless power receiver 200 may generally transmit a CE data packet multiple times per second.

The wireless power receiver 200 may generally transmit a received power (RP) data packet (RP8 in the baseline protocol) to the wireless power transmitter 100 once every 1.5 seconds (S1420).

Optionally, the wireless power receiver 200 may transmit a charge status (CHS) data packet to the wireless power transmitter 100 (S1430).

Summarizing and describing the data packets described above may be as follows.
- CE: The CE data packet may provide feedback related to a desired power level. The CE data packet may include a control error value, where the control error value may be a signed integer value that is a relative measurement value related to a deviation between an actual operating point and a target operating point of the wireless power receiver 200. If the control error value at this time is a positive value, it indicates that the actual operating point is below the target operating point, and may request the wireless power transmitter 100 to increase a power signal. If the control error value is a negative value, it indicates that the actual operating point is above the target operating point, and may request the wireless power transmitter 100 to reduce the power signal.
- RP8: The RP8 data packet may report a received power level. Here, the RP8 data packet may be included only in the baseline protocol.
- CHS: The CHS data packet may provide a charge level of a battery in a load.

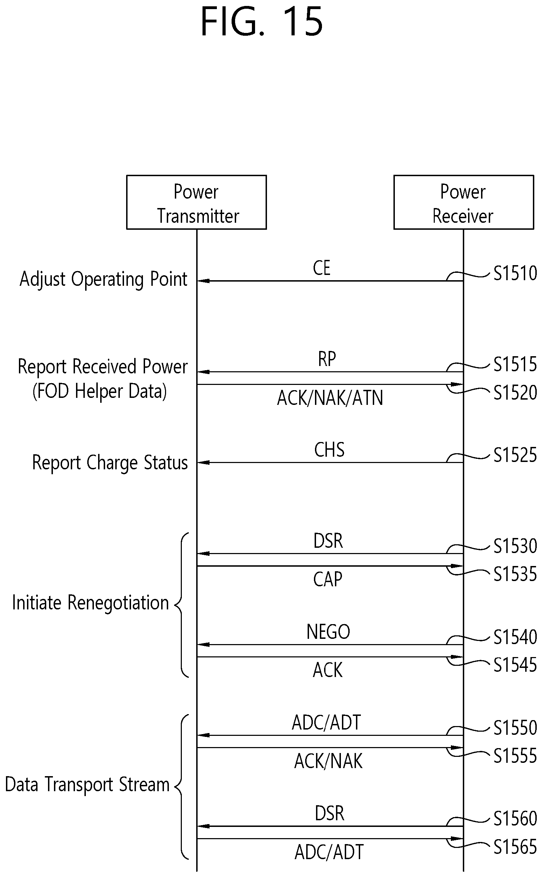

FIG. 15 schematically illustrates a flowchart of a data flow for the Power Transfer Phase 840 in an extended protocol.

Based on FIG. 15, the wireless power receiver 200 may transmit a CE to the wireless power transmitter 100 (S1510). Here, the wireless power receiver 200 may generally transmit a CE data packet multiple times per second.

The wireless power receiver 200 may generally transmit a received power (RP) data packet (an RP in the extended protocol) to the wireless power transmitter 100 once every 1.5 seconds (S1515).

In the power transfer phase, a control error packet (CE) and a received power packet (RP) are data packets that should be repeatedly transmitted/received in accordance with a required timing constraint for control of wireless power.

The wireless power transmitter 100 may control a level of wireless power transmitted based on the control error packet (CE) and the received power packet (RP) received from the wireless power receiver 200.

Meanwhile, in the extended protocol, the wireless power transmitter 100 may respond to the received power packet (RP) with a bit pattern such as an ACK, a NAK, an ATN, or the like (S1520).

For a received power packet having a mode value of 0 (RP/0), the wireless power transmitter 100 responding with an ACK means that power transmission may continue to proceed at a current level.

For the received power packet having the mode value of 0 (RP/0), the wireless power transmitter 100 responding with a NAK means that the wireless power receiver 200 should reduce power consumption.

For a received power packet having a mode value of 1 or 2 (RP/1 or RP/2), the wireless power transmitter 100 responding with an ACK means that the wireless power receiver 200 has accepted a power calibration value included in the received power packet (RP/1 or RP/2).

For the received power packet having the mode value of 1 or 2 (RP/1 or RP/2), the wireless power transmitter 100 responding with a NAK means that the wireless power receiver 200 has not accepted the power calibration value included in the received power packet (RP/1 or RP/2).

The received power packet having the mode value of 1 (RP/1) described above may mean a first calibration data point, and the received power packet having the mode value of 2 (RP/2) may mean an additional calibration data point. Here, the wireless power receiver may transmit the received power packet having the mode value of 2 (RP/2) to the wireless power transmitter multiple times to transmit a plurality of additional power calibration values, and the wireless power transmitter may proceed with a calibration procedure based on the received RP/1 and multiple RP/2s.

The wireless power transmitter 100 responding with an ATN to the received power packet (RP) means that the wireless power transmitter 100 requests allowance of communication. That is, the wireless power transmitter 100 may transmit an attention (ATN) response pattern to request an authority for transmitting a data packet in response to the RP data packet. In other words, the wireless power transmitter 100 may transmit the ATN to the wireless power receiver 200 in response to the RP data packet, and request the authority for transmitting the data packet to the wireless power receiver 200.

Optionally, the wireless power receiver 200 may transmit a charge status (CHS) data packet to the wireless power transmitter 100 (S1525).

Meanwhile, the wireless power transmitter 100 and the wireless power receiver 200 may exchange a data stream response (DSR) data packet, a CAP data packet, and a NEGO data packet to initiate renegotiation related to an element (generally a guaranteed load power) in a power transmission contract.

For example, the wireless power receiver 200 may transmit the DSR data packet to the wireless power transmitter 100 (S1530), and the wireless power transmitter 100 may transmit the CAP to the wireless power receiver 200 (S1535).

In addition, the wireless power receiver 200 may transmit the NEGO data packet to the wireless power transmitter 100 (S1540), and the wireless power transmitter 100 may transmit an ACK to the wireless power receiver 200 in response to the NEGO data packet (S1545).

Here, summarizing data packets related to initiation of a renegotiation phase may be as follows.
- DSR: Any one value among values as follows may be set in the DSR data packet.
   0x00-DSR/nak: indicates that a data packet of the wireless power transmitter 100 received last has been rejected.
   ii) 0x33-DSR/poll: invites the wireless power transmitter 100 to send a data packet.
   iii) 0x55-DSR/nd: indicates that the data packet of the wireless power transmitter 100 received last was not expected.
   iv) 0xFF-DSR/ack: confirms that the data packet of the wireless power transmitter 100 received last has been properly processed.
- CAP: The CAP data packet provides information related to a function of the wireless power transmitter 100. Specific details are as described above.
- NEGO: The NEGO data packet may request the wireless power transmitter 100 to proceed to a renegotiation phase.

The wireless power transmitter 100 and the wireless power receiver 200 may use an auxiliary data control (ADC), an auxiliary data transport (ADT), and a DSR data packet for exchange of application-level data.

That is, from a viewpoint of transmission and reception of a data transmission stream for the exchange of the application-level data, the wireless power receiver 200 may transmit the ADC/ADT to the wireless power transmitter 100 (S1550), and the wireless power transmitter 100 may transmit an ACK/NAK to the wireless power receiver 200 in response to this (S1555). In addition, the wireless power receiver 200 may transmit the DSR to the wireless power transmitter 100 (S1560), and the wireless power transmitter may transmit the ADC/ADT to the wireless power receiver (S1565).

Here, the data transmission stream serves to transfer the application-level data from a data stream initiator to a data stream responder. And, the application-level data may be largely distinguished into i) an authentication application and ii) a proprietary (general-purpose) application.

A message/information related to the authentication application among the application-level data may be summarized as follows.

A message used in an authentication procedure is referred to as an authentication message. The authentication message is used to carry information related to authentication. There are two types of authentication messages. One is an authentication request, and the other is an authentication response. The authentication request is transmitted by an authentication initiator, and the authentication response is transmitted by an authentication responder. A wireless power transmission apparatus and a reception apparatus may be the authentication initiator or the authentication responder. For example, when the wireless power transmission apparatus is the authentication initiator, the wireless power reception apparatus becomes the authentication responder, and when the wireless power reception apparatus is the authentication initiator, the wireless power transmission apparatus becomes the authentication responder.

The authentication request message includes GET_DIGESTS, GET_CERTIFICATE, and CHALLENGE.
- GET_DIGESTS: This request may be used to retrieve a certificate chain digest. The wireless power receiver 200 may request a desired number of digests at once.
- GET_CERTIFICATE: This request may be used to read a segment of a target certificate chain.
- CHALLENGE: This request may be used to start authentication of a power transmitter product device.

The authentication response message includes DIGESTS, CERTIFICATE, CHALLENGE_AUTH, and ERROR.
- DIGESTS: The wireless power transmitter 100 may use a DIGESTS response to send a certificate chain summary and report a slot including a valid certificate chain summary.
- CERTIFICATE: This response may be used for the wireless power transmitter 100 to send a requested segment of a certificate chain.
- CHALLENGE_AUTH: The wireless power transmitter 100 may use CHALLENGE_AUTH to respond to a CHALLENGE request.
- ERROR: This response may be used to transmit error information in a power transmitter.

The authentication message may be referred to as an authentication packet, and may be referred to as authentication data or authentication control information. Also, a message such as GET_DIGEST, DIGESTS, or the like may be referred to as a GET_DIGEST packet, a DIGEST packet, or the like.

Meanwhile, as described above, the wireless power receiver 200 and the wireless power transmitter 100 may transfer application-level data through a data transmission stream. The application-level data transferred through the data transmission stream may be configured as a data packet sequence having a structure as follows.
- An initial ADC data packet opening a stream.

A type of message included in a stream.
ii) A number of data bytes of a stream.
- A series of ADT data packets including an actual message.
- A final ADC/end data packet closing a stream.

Hereinafter, a data transmission stream related to an example in which the ADC, ADT, and ADC/end data packets described above are used will be described through a drawing.

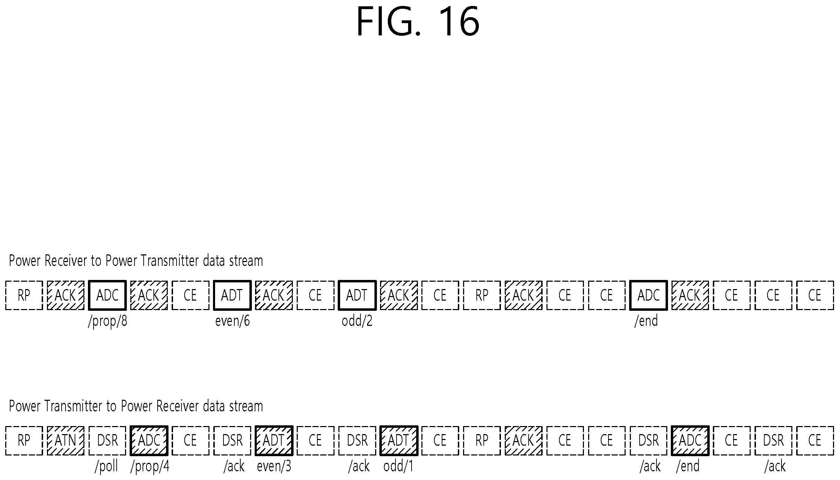

FIG. 16 illustrates a data stream of an application level between the wireless power transmitter 100 and the wireless power receiver 200 based on an example.

Referring to FIG. 16, the data stream may include an auxiliary data control (ADC) data packet and/or an auxiliary data transport (ADT) data packet.

The ADC data packet is used for opening the data stream. The ADC data packet may indicate a type of a message included in the stream and a number of data bytes. On the other hand, the ADT data packet is sequences of data including an actual message. When informing of an end of the stream, the ADC/end data packet is used. For example, a maximum number of data bytes in the data transmission stream may be limited to 2047.

In order to inform of whether the ADC data packet and the ADT data packet are normally received, an ACK or a NAC (NACK) is used. Between transmission timings of the ADC data packet and the ADT data packet, control information necessary for wireless charging such as a control error packet (CE) or a DSR may be transmitted.

Using such a data stream structure, information related to authentication or other application-level information may be transmitted and received between the wireless power transmission apparatus and the reception apparatus.

An example for understanding an operation between the wireless power transmitter 100 and the wireless power receiver 200 in the Power Transfer Phase 840 described above may be described as follows.

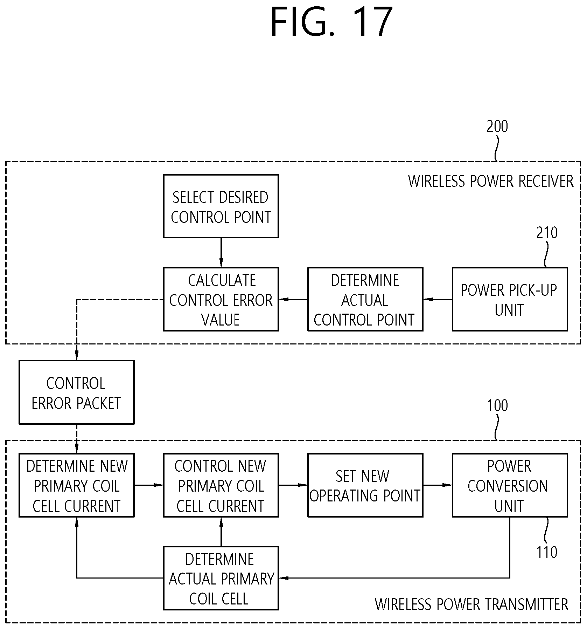

FIG. 17 illustrates a power control method based on an embodiment.

In the power transfer phase in FIG. 17, the wireless power transmitter 100 and the wireless power receiver 200 may control an amount of transferred power by performing communication in parallel with power transmission and reception. The wireless power transmission apparatus and the wireless power reception apparatus operate at a specific control point. The control point indicates a combination of a voltage and a current provided at an output of the wireless power reception apparatus when power transfer is performed.

Describing in more detail, the wireless power reception apparatus selects a desired control point - a desired output current/voltage, a temperature of a specific position of a mobile device, etc., and additionally determines an actual control point currently operating. The wireless power reception apparatus may calculate a control error value using the desired control point and the actual control point, and transmit this as a control error packet to the wireless power transmission apparatus.

And, the wireless power transmission apparatus may control power transfer by setting/controlling a new operating point - an amplitude, a frequency, and a duty cycle - using the received control error packet. Therefore, the control error packet is transmitted/received at a predetermined time interval in a strategy transfer phase, and as an embodiment, the wireless power reception apparatus may set the control error value to a negative number to reduce a current of the wireless power transmission apparatus, and set the control error value to a positive number to increase the current, and transmit it. As such, in an induction mode, the wireless power reception apparatus may control power transfer by transmitting the control error packet to the wireless power transmission apparatus.

In a resonance mode, it may operate in a different method from that in the induction mode. In the resonance mode, one wireless power transmission apparatus should be able to serve a plurality of wireless power reception apparatuses simultaneously. However, when controlling power transfer as in the induction mode described above, since transferred power is controlled by communication with one wireless power reception apparatus, it may be difficult to control power transfer to additional wireless power reception apparatuses. Therefore, in the resonance mode of the present specification, the wireless power transmission apparatus commonly transfers basic power, and a method in which the wireless power reception apparatus controls an amount of received power by controlling its own resonance frequency is intended to be used. However, even in such an operation of the resonance mode, the method described in FIG. 17 is not completely excluded, and additional control of transmission power may be performed by the method of FIG. 17.

### <Operation based on power profile>

Wireless charging methods include a magnetic induction method using a magnetic induction phenomenon between a primary coil and a secondary coil, and a magnetic resonance method transferring power by achieving magnetic resonance using a frequency in a band of several tens of kHz to several MHz. Here, a wireless charging standard related to the magnetic resonance method is led by a consortium called A4WP, and the magnetic induction method is led by the Wireless Power Consortium (WPC). Here, in the WPC, it is designed so that various status information and a command related to a wireless charging system can be exchanged in-band.

The Qi standard in the WPC defines a baseline power profile (BPP), an extended power profile (EPP), and a magnetic power profile. Hereinafter, the BPP, the EPP, and an MPP will be respectively described.

### A. BPP (baseline power profile)

The BPP is related to a power transfer profile between a wireless power transmission apparatus and a reception apparatus supporting power transmission up to 5W. And, in the BPP, unidirectional communication from a wireless power receiver to a wireless power transmitter is supported. A communication method at this time may correspond to amplitude shift keying (ASK). In the BPP, a protocol phase of ping, configuration, and power transfer may exist.

### B. EPP (extended power profile)

The EPP is related to a power transfer profile between a wireless power transmission apparatus and a reception apparatus supporting power transmission up to 15W. And, in the EPP, bidirectional communication between a wireless power receiver and a wireless power transmitter is supported. A communication method from the wireless power receiver to the wireless power transmitter may correspond to amplitude shift keying (ASK), and a communication method from the wireless power transmitter to the wireless power receiver may correspond to frequency shift keying (FSK). In the EPP, a protocol phase of ping, configuration, negotiation, and power transfer may exist.

### (a) Compatibility in EPP

The EPP may correspond to a higher profile of the BPP.

For example, when a BPP wireless power receiver is arranged on an EPP wireless power transmitter, the EPP wireless power transmitter may operate as a BPP wireless power transmitter.

For example, when an EPP wireless power receiver is arranged on a BPP wireless power transmitter, the EPP wireless power receiver may operate as a BPP wireless power receiver.

That is, the EPP may maintain compatibility with the BPP.

### (b) EPP indicating method of EPP wireless power receiver

The EPP wireless power receiver may indicate that it is the EPP wireless power receiver by setting a 'neg' bit in a configuration packet (i.e., CFG) as 1. Specific examples related to the configuration packet are as described above.

### (c) EPP indicating method of EPP wireless power transmitter

When the EPP wireless power transmitter receives the configuration packet in which the 'neg' bit is set to 1 from the wireless power receiver, the EPP wireless power transmitter may respond to this with an ACK FSK bit pattern to the wireless power receiver.

For reference, as described above, since the BPP wireless power transmitter does not support an FSK communication method, the BPP wireless power transmitter cannot transmit an FSK bit pattern. Accordingly, the EPP wireless power receiver that transmitted the configuration packet to the BPP wireless power transmitter by setting the 'neg' bit to 1 fails to receive the above ACK response, and thereby can identify that a counterpart wireless power transmitter is the BPP wireless power transmitter.

Meanwhile, from Qi v2.0, a new power transfer profile is intended to be provided to a wireless power transfer system, and among power transfer profiles proposed at this time, there is a magnetic power profile (MPP). The MPP may correspond to a proprietary extension of 'Apple' company based on Qi v1.3.0.

### C. MPP (magnetic power profile)

The MPP is related to a power transfer profile between a wireless power transmission apparatus and a reception apparatus supporting power transmission up to 15W. And, in the MPP, bidirectional communication between a wireless power receiver and a wireless power transmitter is supported. A communication method from the wireless power receiver to the wireless power transmitter may correspond to amplitude shift keying (ASK), and a communication method from the wireless power transmitter to the wireless power receiver may correspond to frequency shift keying (FSK). At this time, during a negotiation and power transfer phase, rapid FSK (NCYCLE = 128) may be used.

In the MPP, a protocol phase of ping, configuration, MPP negotiation, and MPP power transfer may exist.

### (a) Compatibility in MPP

The MPP may correspond to a higher profile of the BPP.

For example, when a BPP wireless power receiver is arranged on an MPP wireless power transmitter, the MPP wireless power transmitter may operate as a BPP wireless power transmitter.

For example, when an MPP wireless power receiver is arranged on a BPP wireless power transmitter, the MPP wireless power receiver may operate as a BPP wireless power receiver.

That is, the MPP may maintain compatibility with the BPP.

### (b) MPP operation of MPP wireless power receiver (MPP indicating method)

The MPP wireless power receiver may use a specific MPP indicator in an extended ID packet.

In order for the MPP wireless power receiver to inform whether the MPP is supported through an XID, the wireless power receiver should inform a wireless power transmitter that the XID is transmitted through an ID packet. The ID packet transmitted by the MPP wireless power receiver may be as follows.

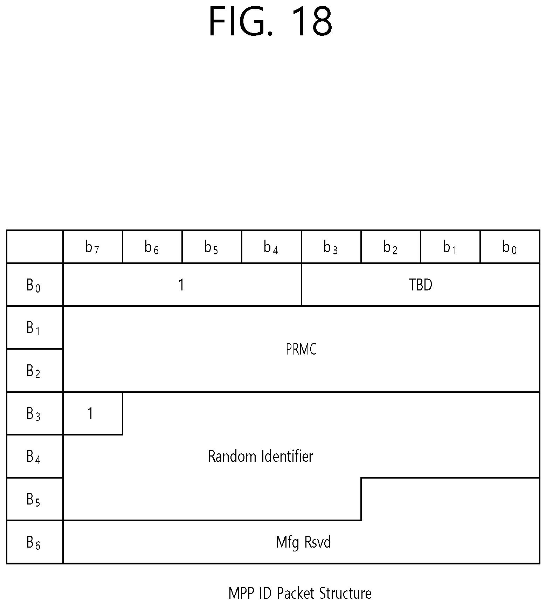

FIG. 18 schematically illustrates a structure of an MPP ID packet.

Based on FIG. 18, in the MPP ID packet, a value of a major version field from b4 to b7 of B0 may be set to 1.

In the MPP ID packet, a value of a minor version field from b0 to b3 of B0 may be a value to be determined later.

In the MPP ID packet, a value of a manufacture code of B1 and B2 may be allocated as a PRMC code.

In the MPP ID packet, a value of an 'ext' field of b7 of B3 is set to 1, which may indicate that an XID packet is additionally transmitted.

In the MPP ID packet, a value of a random identifier field of b0 to b6 of B3 and b3 to b7 of B4 and B5 may be set based on a random device identification policy.

FIG. 19 schematically illustrates an example of an XID packet in an MPP.

Based on FIG. 19, the XID packet in the MPP may include an 'XID Selector' field, a 'Restricted' field, a 'Freq Mask' field, and the like.

Here, whether the MPP is supported or not may be determined based on whether a value of an 'XID selector' is 0xFE. That is, when a value of B_0 of the XID is 0xFE, the XID at this time may correspond to information indicating that the wireless power receiver supports the MPP.

The 'Restricted' field may correspond to information informing whether the wireless power receiver operates in an MPP restricted mode or operates in an MPP full mode. If a case where the wireless power receiver operates in the MPP restricted mode is selected, the above field may be set to 1. On the other hand, in other cases (for example, when a case where the wireless power receiver does not operate in the MPP restricted mode is selected), the above field may be set to 0.

A 'Preferred Frequency' field may mean a preferred frequency of the MPP. Here, the wireless power receiver may set this field to 128 kHz when intending to retrieve information from the wireless power transmitter (in a negotiation phase) before switching a frequency. In other cases, the wireless power receiver may set this field to 360 kHz.

The 'Freq Mask' field corresponds to a field for determining whether an operating frequency of 360 kHz is supported. That is, when the 'Freq Mask' field is set to 0, 360 kHz is supported.

In summary, by determining whether an 'Ext' bit of the ID received from the wireless power receiver by the wireless power transmitter is set to 1 and determining whether B_0 of the XID is set to 0xFE, the wireless power transmitter may determine whether the wireless power receiver supports the MPP.

### (c) MPP operation of MPP wireless power transmitter (MPP indicating method)

After detecting an arrangement of a wireless power receiver on a charging surface, the MPP wireless power transmitter may perform a digital ping and identify the receiver using information included in an ID and an XID packet.

Here, the wireless power transmitter may determine that the wireless power receiver supports the MPP when all conditions as follows are satisfied.
- Qi version: A Qi protocol version of the ID packet is set to (Major=1, Minor=TBD) or higher.
- MPP support notification: A lower header (Byte 0) of the XID packet is set as an MPP selector.

If the above two conditions are not satisfied, the wireless power transmitter may proceed with a subsequent procedure based on a Qi v1.3 specification.

Meanwhile, based on an MPP operation mode requested by the MPP wireless power receiver in the XID packet, the wireless power transmitter performs the following.
- Restricted profile activation (MPP restricted mode): when a 'restricted' flag is set to 1.
- Full profile activation (MPP full mode): when the 'restricted' flag is set to 0.

Specific examples related to the above restricted profile and specific examples related to a full profile will be described later.

Meanwhile, when the MPP wireless power transmitter receives a configuration packet in which a 'neg' bit is set to 1 from the wireless power receiver, the MPP wireless power transmitter (in the MPP full mode) may respond to this with an MPP ACK FSK bit pattern to the wireless power receiver (in the MPP full mode).

For reference, since the wireless power transmitter in the MPP restricted mode does not support an FSK communication method, the wireless power transmitter in the MPP restricted mode cannot transmit an FSK bit pattern. However, since the wireless power transmitter in the MPP restricted mode uses an operating signal of 360 kHz for power transfer, accordingly, the MPP wireless power receiver that transmitted the configuration packet to the wireless power transmitter operating in the MPP restricted mode by setting the 'neg' bit to 1 can identify that a counterpart wireless power transmitter is the wireless power transmitter in the MPP restricted mode through an operating frequency.

### (d) Mode of MPP

Meanwhile, two modes may exist in the MPP. One of them is an MPP Restricted mode (in other words, an MPP baseline profile), and the other is an MPP Full mode (in other words, an MPP full profile).

Briefly explaining a difference between the two, in the MPP restricted mode, a 'restricted' field in an XID is set to 1, but in the MPP full mode, the 'restricted' field in the XID is set to 0.

Also, FSK communication is not supported in the MPP restricted mode, but FSK communication may be supported in the MPP full mode.

Additionally, since FSK communication is not supported in the MPP restricted mode, an MPP ACK for a CFG cannot be transmitted, and accordingly, MPP negotiation is not supported in the MPP restricted mode. In contrast, since FSK communication is supported in the MPP full mode, the MPP ACK for the CFG can be transmitted, and accordingly, the MPP negotiation may be supported in the MPP full mode.

Hereinafter, the MPP restricted mode and the MPP full mode will be described in more detail. Here, the MPP restricted mode may be mixed with the MPP baseline profile, and the MPP full mode may be mixed with the MPP full profile.

Hereinafter, for rich understanding of the MPP restricted mode and the MPP full mode, a protocol in each mode will be described in more detail.

### i) MPP restricted mode

As described above, FSK communication is not supported in the MPP restricted mode. That is, in the MPP restricted mode, a data packet transmitted from a wireless power transmitter to a wireless power receiver may not exist. Under this background, the protocol in the MPP restricted mode will be described through a drawing.

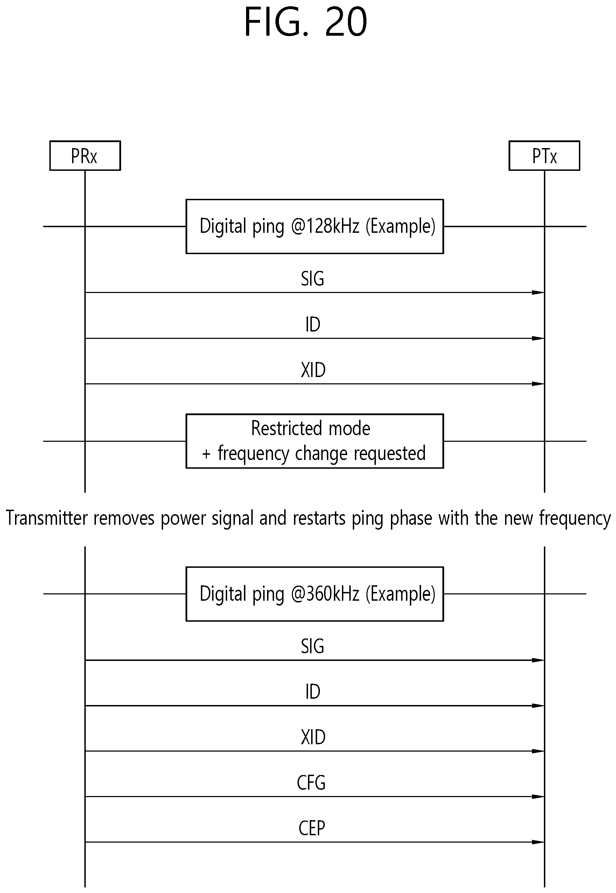

FIG. 20 schematically illustrates the protocol in the MPP restricted mode.

Based on FIG. 20, the wireless power receiver may transmit an SIG on a first operating frequency (for example, 128 kHz) to the wireless power transmitter. At this time, the first operating frequency may correspond to an operating frequency on which a BPP and/or an EPP can be performed. And, the first operating frequency at this time corresponds to a frequency driven by the wireless power transmitter.

The wireless power receiver may transmit an ID packet on the first operating frequency to the wireless power transmitter. At this time, since an XID is necessarily transmitted in the MPP, an 'ext' bit of an ID may be set to 1 to indicate that the XID is additionally transmitted.

The wireless power receiver may transmit an XID packet on the first operating frequency to the wireless power transmitter.

At this time, a value of B0 in the XID may be 0xFE, and if the value of B0 in the XID is set to 0xFE, this may correspond to information indicating that the wireless power receiver supports the MPP. In addition, a 'Restricted' field in the XID at this time may be set to 1 so as to inform that the wireless power receiver operates in the MPP restricted mode.

Here, when the wireless power transmitter receives the above XID packet indicating the MPP restricted mode, the wireless power transmitter may remove a power signal and restart a ping phase at a new operating frequency.

When the ping phase is restarted, the wireless power receiver starts again from transmission of the SIG. However, an operating frequency at this time may be a second operating frequency (for example, 360 kHz).

Afterwards, the wireless power receiver respectively transmits ID, XID, and CFG packets to the wireless power transmitter at the second operating frequency. In addition, the wireless power receiver may receive wireless power based on an MPP baseline from the wireless power transmitter by transmitting a CEP to the wireless power transmitter.

### ii) MPP full mode

As described above, FSK communication may be supported in the MPP full mode. That is, in the MPP full mode, a data packet transmitted from a wireless power transmitter to a wireless power receiver may exist. In other words, MPP negotiation, etc. may proceed between the wireless power transmitter and the wireless power receiver. Under this background, a protocol in the MPP full mode will be described through a drawing.

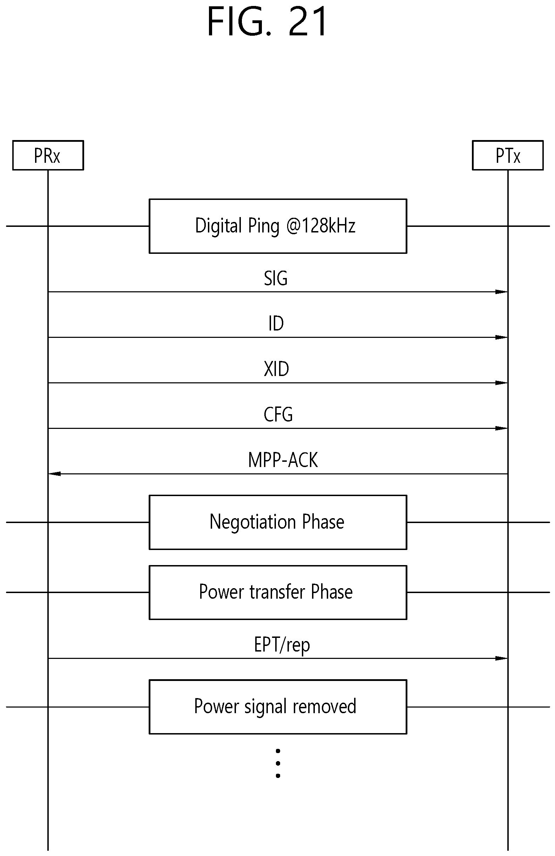

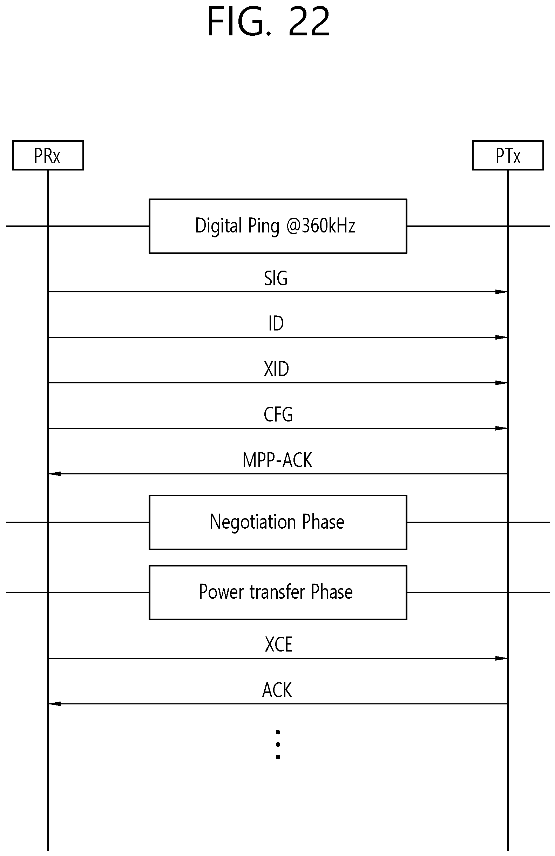

FIG. 21 and FIG. 22 schematically illustrate the protocol in the MPP full mode.

First, based on FIG. 21, the wireless power receiver may transmit an SIG on a first operating frequency (for example, 128 kHz) to the wireless power transmitter. At this time, the first operating frequency may correspond to an operating frequency on which a BPP and/or an EPP can be performed. And, the first operating frequency at this time corresponds to a frequency driven by the wireless power transmitter.

The wireless power receiver may transmit an ID packet on the first operating frequency to the wireless power transmitter. At this time, since an XID is necessarily transmitted in the MPP, an 'ext' bit of an ID may be set to 1 to indicate that the XID is additionally transmitted.

The wireless power receiver may transmit an XID packet on the first operating frequency to the wireless power transmitter.

At this time, a value of B0 in the XID may be 0xFE, and if the value of B0 in the XID is set to 0xFE, this may correspond to information indicating that the wireless power receiver supports the MPP. In addition, a 'Restricted' field in the XID at this time may be set to 0 so as to inform that the wireless power receiver operates in the MPP full mode.

Meanwhile, in the MPP full mode, unlike the MPP restricted mode, even if the wireless power transmitter receives an XID packet from the wireless power receiver, a power signal is not removed. At this time, since the power signal is still not removed, the wireless power receiver transmits a CFG packet to the wireless power transmitter after the XID packet.

And, the wireless power receiver may receive an MPP ACK from the wireless power transmitter as a response to the above CFG packet.

The wireless power receiver receiving the MPP ACK enters a negotiation phase with the wireless power transmitter, and both the wireless power receiver and the wireless power transmitter may proceed with negotiation.

After progression of the negotiation, the wireless power receiver may enter a power transfer phase with the wireless power transmitter.

Meanwhile, the wireless power receiver transmits an EPT packet to the wireless power transmitter. The wireless power transmitter receiving the EPT packet removes a power signal, and afterwards may restart a ping phase at a new operating frequency.

Based on FIG. 22, when the ping phase is restarted, the wireless power receiver starts again from transmission of the SIG. However, an operating frequency at this time may be a second operating frequency (for example, 360 kHz).

Afterwards, the wireless power receiver respectively transmits ID, XID, and CFG packets to the wireless power transmitter at the second operating frequency. And, the wireless power receiver may receive an MPP ACK from the wireless power transmitter.

The wireless power receiver receiving the MPP ACK enters a negotiation phase with the wireless power transmitter at the second operating frequency, and both the wireless power receiver and the wireless power transmitter may proceed with negotiation.

After progression of the negotiation, the wireless power receiver enters a power transfer phase with the wireless power transmitter at the second operating frequency. In addition, the wireless power receiver may receive wireless power based on the MPP full mode from the wireless power transmitter by transmitting an XCE to the wireless power transmitter and (for example, receiving an ACK) as a response to this.

Hereinafter, the present specification is described.

Drawings below were created to describe a specific example of the present specification. Since a name of a specific apparatus or a name of a specific signal/message/field described in the drawings is provided exemplarily, a technical feature of the present specification is not limited to a specific name used in the drawings below.

In a case of wireless charging for kitchen appliances, when excessive power transmission is performed in a wireless power transmitter, there is a risk of damage to a wireless power receiver. For this, only products passing a WPC Ki authentication test should be used with each other, and Authentication for guaranteeing this is necessary. At this time, Authentication of Qi may be borrowed. In a case of Authentication, a time required for a motion related to authentication in a Security IC takes about 1 second in total, which causes inconvenience to a user because a corresponding motion should be completed before start of charging.

Accordingly, the present embodiment proposes a method of an Authentication motion of a wireless charging appliance for kitchen and a related protocol. Based on the proposed technology, an inconvenience of a user due to a required time of the Authentication motion is resolved.

Ki cordless Kitchen is a technology standard for eliminating a cord in a kitchen using a Near Field Communication (NFC) technology and a wireless charging technology.

Through wireless power up to 2300W, it enables a kitchen hub, an induction hub, etc. to operate from a small kitchen home appliance (an air fryer, a blender, a rice cooker).

By using the NFC technology for Foreign Object Detection (FoD) and power control, safety and convenience are enhanced, and as a technology standard, all home appliances certified for Ki-cordless are made compatible regardless of a manufacturer.

Hereinafter, it is intended to be described based on WPC Ki.

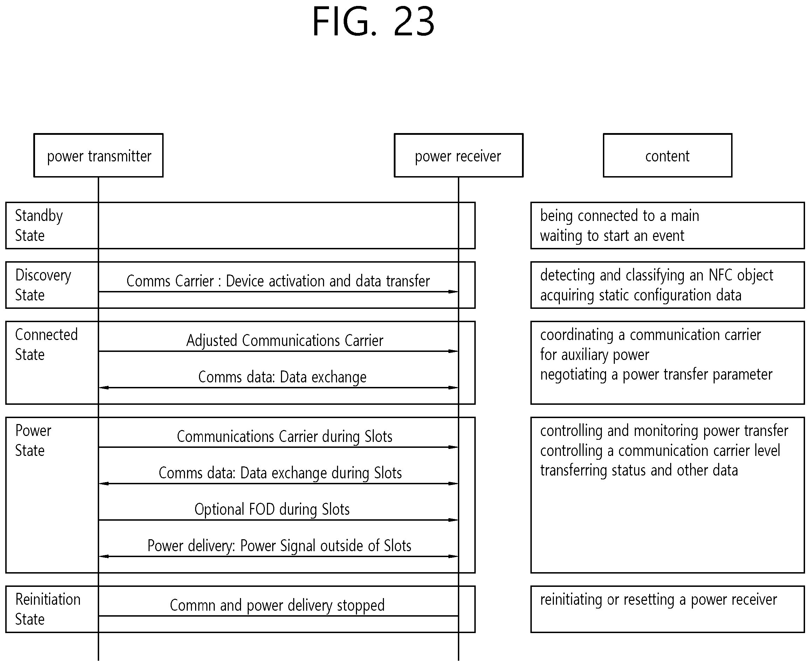

FIG. 23 is a diagram illustrating an overview related to a power transfer protocol state.

Referring to FIG. 23, the power transfer protocol state includes a total of 5 states such as a Standby State, a Discovery State, a Connected State, a Power State, and a Reinitiation State.

The standby state is a step/phase of being connected to a main and waiting to start an event. The discovery state is a step/phase of detecting and classifying an NFC object and acquiring static configuration data. At this time, apparatus activation and data transfer are possible. The connected state is a state/phase of coordinating a communication carrier for auxiliary power and negotiating a power transfer parameter. The power state is a state/phase of controlling and monitoring power transfer, controlling a communication carrier level, and transferring status and other data. At this time, a wireless power transmitter transfers a communication carrier to a wireless power receiver during a slot, and exchanges communication data with each other. Also, the wireless power transmitter transfers an optional FOD during the slot, and exchanges a power signal outside the slot. The reinitiation state is a step/phase in which a power receiver is reinitiated or reset. At this time, communication phase power transfer are stopped.

In a case of Ki, the discovery and the connected state are performed before entering a power state for operation of a kitchen appliance, and this phase is a phase performed only by an NFC motion.

Discovery is performed by the NFC motion, and power for NFC communication is transmitted, and after performing a connection motion of TX-RX, it proceeds to a power state in which power transmission for operation of the kitchen appliance is performed. If an Authentication process is added here, a problem occurs in that a time of a connected state, which is a preparation time for operation of the kitchen appliance, is added by a maximum of about 1 second (if bidirectional, it is expected to take about 2 seconds).

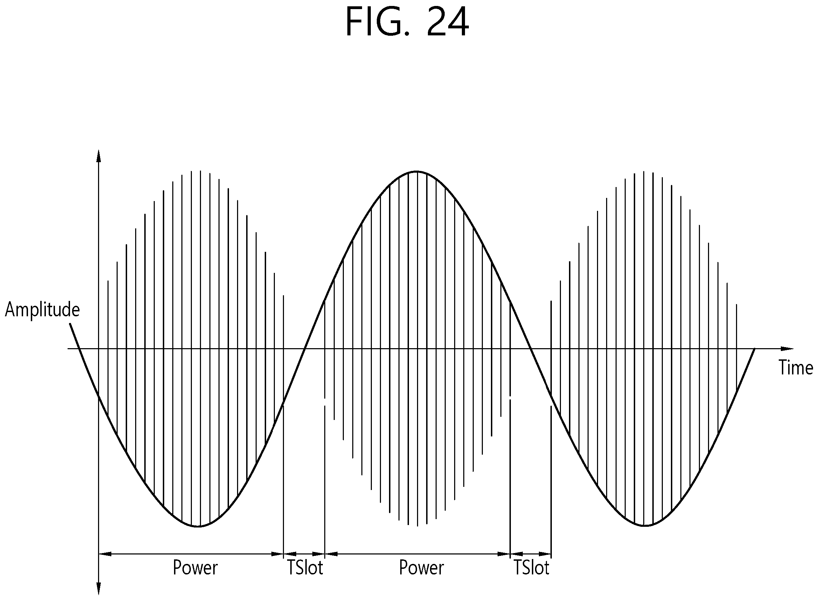

FIG. 24 is a diagram illustrating a range of a driving signal.

Referring to FIG. 24, an amplitude of a signal may be represented by a power period and a T slot period in a power state. In a case of Ki, NFC communication in the power state is performed only in a Zero Cross period (a T slot in a diagram) during power transmission in order to prevent interference between power transmission and a communication signal. That is, a wireless charging apparatus may perform only power transmission in the power period, and stop charging and perform NFC communication in the T slot period.

An inverter of a wireless power transmitter may be temporarily terminated in a slot part. That is, the inverter may operate for slot generation.

Here, in a case of a home power source, since a frequency of about 50 Hz to 60 Hz is fixed, a slot may physically occur periodically.

Meanwhile, NFC communication may be performed during the slot period, and accordingly, a size of a slot may have a margin period enough for an NFC packet to enter.

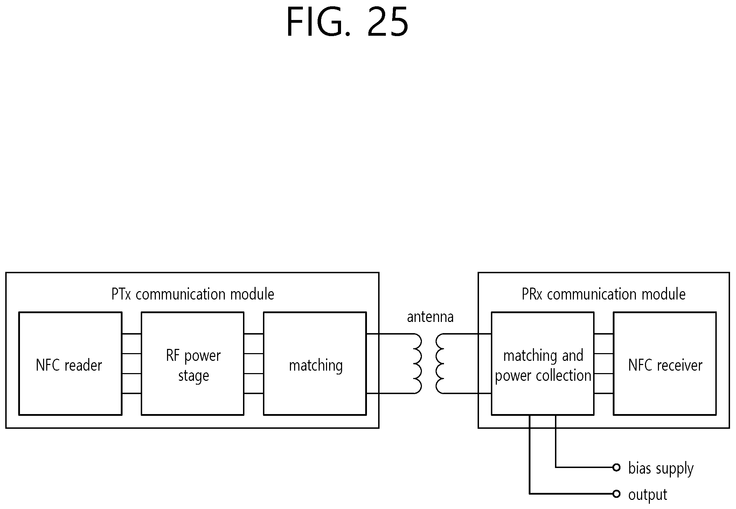

FIG. 25 schematically illustrates an example related to NFC communication having a power collection function using the same antenna.

Based on FIG. 25, a communication module of a wireless power transmitter may include an NFC reader, an RF power stage, and matching. A communication module of a wireless power receiver may include matching and power collection, and an NFC receiver.

An NFC communication carrier may always perform communication in a connected state, and may also be used for power collection. A power receiver may request an amplitude adjustment of the communication carrier to achieve a target received power.

Auxiliary power transmission is necessary to operate a system electronic device of a receiver. A system may include a user interface or other function operable in a connected state. The user interface may consist of a button, an LED, a buzzer, etc., and may also use an advanced electronic device such as a microcontroller.

When auxiliary power transmission is used, an NFC antenna may be used for both communication and power collection. A schematic appearance of a system is as illustrated in FIG. 25. An NFC antenna design of a power transmitter and a power receiver may be optimized to enable sufficient power collection within an entire operating range.

In summary, in a case of Ki, both a wireless power transmitter and a wireless power receiver include an NFC function for communication during wireless charging. In a case of the wireless power transmitter, it supports an NFC reader function and includes a power state for NFC wireless charging, and in a case of the wireless power receiver, it supports an NFC tag function.

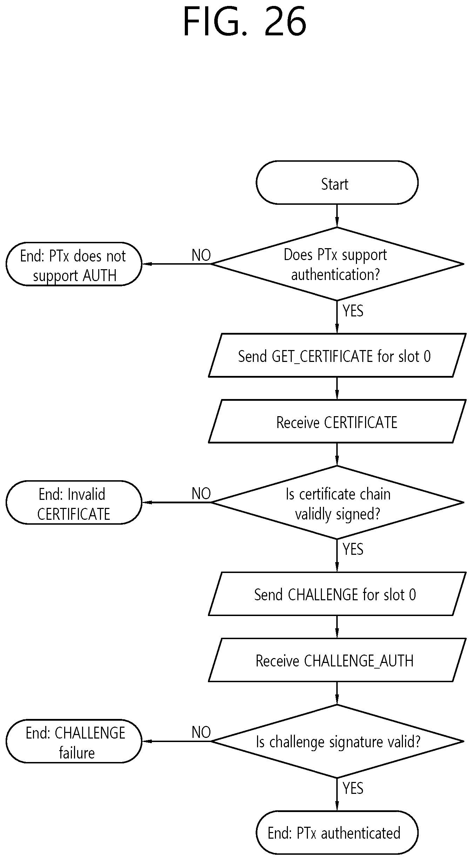

FIG. 26 is a diagram illustrating an authentication protocol of a wireless power receiver and a wireless power transmitter.

Referring to FIG. 26, when a wireless power receiver operates with an unauthenticated wireless power transmitter, there is a risk of damage or defect occurring during charging.

An Authentication motion for confirming that it is an authenticated wireless power transmitter is as follows. A wireless power receiver receives a Certificate from a wireless power transmitter to check Validation, and after going through a Challenge process, checks Validation of a Challenge Signature, and then completes Authentication.

Among these, an operation requiring communication and computation time between a Security IC and a main controller IC is i) a process in which a wireless power receiver checks Validation of a wireless power transmitter Certificate, ii) a process in which a wireless power transmitter computes Challenge_Auth from Challenge of a wireless power receiver, and iii) a process in which a wireless power receiver checks Validation of wireless power transmitter Challenge_Auth, which is a total of three processes/steps.

A total time required varies depending on a Security IC and a main controller IC to be used, but in a typical Security IC and main controller IC for Qi, it takes about 1 second for a total Authentication process.

Referring to FIG. 26, when a wireless power transmitter does not support authentication, the wireless power transmitter may not support AUTH and stop a protocol. A wireless power receiver receives CERTIFICATE from a wireless power transmitter, but when a CERTIFICATE CHAIN is not valid, it may see it as an invalid CERTIFICATE and stop the protocol. A wireless power receiver receives computed CHALLENGE_AUTH from a wireless power transmitter, but when CHALLENGE_AUTH is not valid, it may see it as a CHALLENGE failure and stop the protocol. When CHALLENGE_AUTH is valid, a wireless power transmitter may be authenticated.

For bidirectional authentication in which a wireless power transmitter and a wireless power receiver check whether each other is authenticated, they should change roles of an initiator and a responder and go through the same authentication process.

Meanwhile, in the WPC, an Authentication function is provided only for a certified product. A wireless power transmitter and a wireless power receiver confirm whether genuine authentication is valid through a process of exchanging and checking a certificate.

At this time, in order to apply a protocol created based on Qi in-band communication to a Ki standard adopting NFC as a communication function, modification and supplementation for application of an Authentication protocol are necessary.

More specifically, Ki has decided to introduce a Qi Authentication technology by introducing an Authentication technology.

However, in a Ki standard, an update of a protocol is necessary because a communication method has changed from in-band to NFC. And, performing bidirectional Authentication of wireless power transmitter-wireless power receiver needs to be discussed. For example, when authenticating a wireless power receiver in a wireless power transmitter, a genuine status is checked through a request of a CERTIFICATE and performance of a CHALLENGE, so that a wireless power receiver can also perform the same Authentication to a wireless power receiver. Normal power transmission may be performed after Authentication is completed.

At this time, an MCU of a CORTEX M4 200MHz class and a Security Element for an Authentication function may be used. In this case, an operation requiring communication and/or computation time between a Security IC and a Main Controller IC may consist of a total of three processes: a process of checking Validation of a CERTIFICATE (level of ~500ms), a process of computing CHALLENGE_AUTH from a CHALLENGE, and a process of checking Validation of CHALLENGE_AUTH (level of ~300ms).

Under this background, the present specification proposes a method of a bidirectional Ki Authentication motion for a wireless charging apparatus for kitchen and a related protocol.

Drawings below were created to describe a specific example of the present specification. Since a name of a specific apparatus or a name of a specific signal/message/field described in the drawings is provided exemplarily, a technical feature of the present specification is not limited to a specific name used in the drawings below.

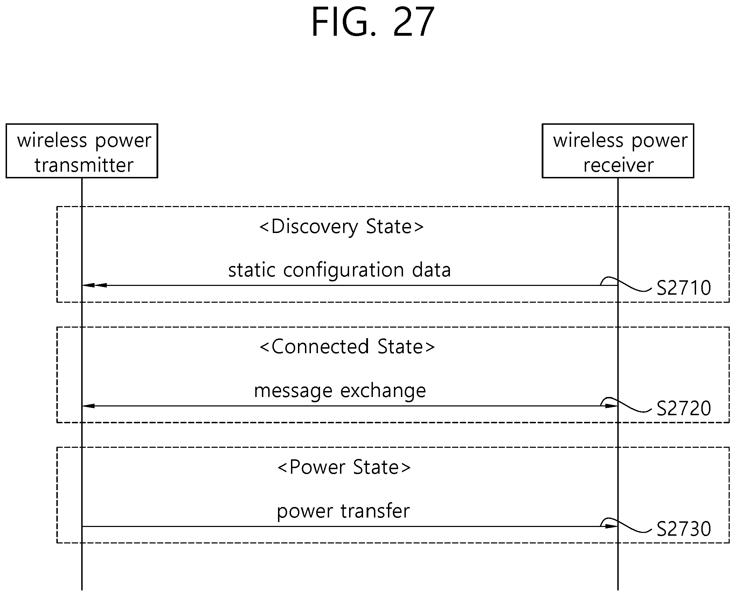

FIG. 27 is a flowchart of a method of transferring wireless power based on an embodiment of the present specification.

Based on FIG. 27, a wireless power transmitter may receive configuration data from a wireless power receiver in a discovery state (S2710). Here, the configuration data may correspond to the static configuration data described above, for example.

Here, the wireless power transmitter may establish the communication with the wireless power receiver in a discovery state.

As described above, a power transmitter spends most of a time in a standby state, and waits for a user to place an object within a detectable operating range. The power transmitter may actively search for an object using a small detection signal, or start a search when a user triggers or receives a signal from another source, or may use both of these methods. Here, when a power transmitter enters a discovery state, it may perform object identification.

By the wireless power transmitter, after the discovery state, a message may be exchanged with the wireless power receiver in a connected state (S2720).

As described above, a power receiver negotiates a parameter managing power transmission communication. Before requesting a power transmitter to proceed to a power state, a power receiver may execute a function as follows.
- Control a communication carrier to a higher power level to activate a user interface of a power receiver.
- Exchange auxiliary data such as network connectivity, a firmware update, authentication, a data log, etc. of a system.

A power transmitter may periodically perform a foreign object detection (FOD) procedure in a connected state.

By the wireless power transmitter, after the connected state, power may be transferred to the wireless power receiver in a power state (S2730).

Here, the wireless power transmitter may transmit or receive information related to changing a role between an authentication initiator and an authentication responder. The information related to changing the role between the authentication initiator and the authentication responder may be included in a request (RQST) message. At this time, the RQST message may be transmitted or received in the connected state or the power state.

Hereinafter, an example of information related to changing a role between an authentication initiator and an authentication responder will be described as follows through a drawing.

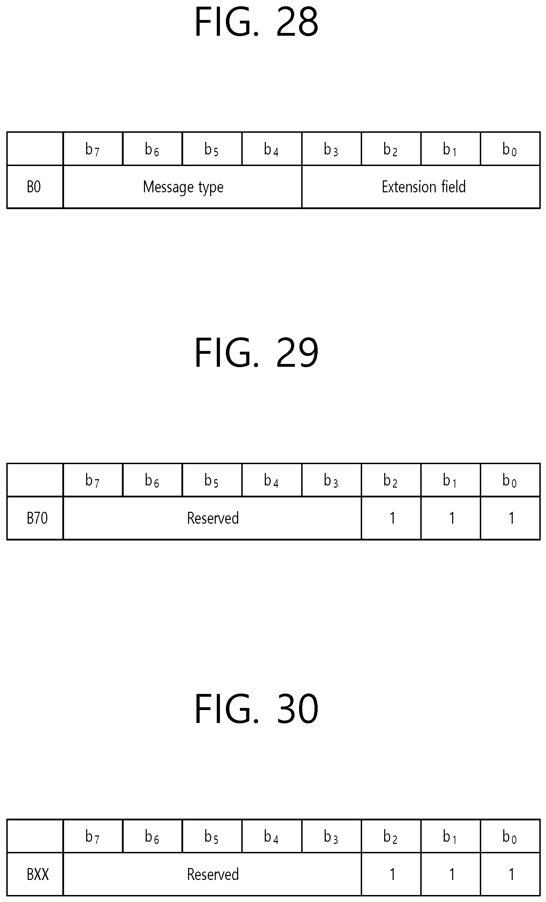

FIG. 28 schematically illustrates an example of information related to changing a role between an authentication initiator and an authentication responder.

Based on FIG. 28, information related to changing a role between an authentication initiator and an authentication responder may have a format of an RQST message. Of course, in the present specification, a format of an RQST message is brought as an example of information related to changing a role between an authentication initiator and an authentication responder, but the information related to changing the role between the authentication initiator and the authentication responder does not necessarily have only a format of an RQST message.

Here, the RQST message is used to request a specific message. An extension field of the RQST message is reserved, and a payload field includes a message type and an extension field value of a requested message or parameter. A response to the RQST message includes a requested message type and an extension field value, and a defined payload field including requested information. Summarizing this may be as follows.
- Message type (free format): A type of a requested message.
- Extension field (free format): An extension field of a requested message type.

As described above, when a wireless power transmitter and a wireless power receiver change roles of an Initiator and a Responder with each other, they may request a role change through a request packet, and at this time, a value of an RQST message may be determined as follows.

### Example) Message type: Authentication (0xA), Extension Field: Role Exchange (0xE)

Here, a transmission subject of the RQST message may be a wireless power transmitter, or may be a wireless power receiver.

Returning to FIG. 27 again, the wireless power transmitter may transmit or receive specific information from the wireless power receiver.

The specific information may include information related to whether an authentication function is supported. At this time, the specific information may include information related to whether a bi-directional authentication function is supported. And, the specific information may include information related to whether simultaneous authentication is supported.

Here, if a wireless power transmitter receives the above specific information from a wireless power receiver, the specific information may be included in the (static) configuration data. And, the configuration data may be included in an NFC Data Exchange Profile Format (NDEF) message.

An example related to such a case will be described as follows through a drawing.

FIG. 29 schematically illustrates an example of specific information received by a wireless power transmitter.

Based on FIG. 29, whether Authentication is supported may be added to Static configuration data of an NDEF message of a wireless power receiver. And, Authentication may be performed between a wireless power transmitter and a wireless power receiver.

In the example of FIG. 29, summarizing examples of specific information may be as follows.

### Example) NDEF Data B70

B0: Whether Authentication is supported (wireless power receiver -> wireless power transmitter) or (wireless power transmitter -> wireless power receiver)
B1: Whether bidirectional Authentication is supported (wireless power receiver -> wireless power transmitter) or (wireless power transmitter -> wireless power receiver)
B2: Whether Authentication simultaneous Process is supported

A wireless power receiver adds a bit indicating whether Authentication is supported to Static configuration data of an NDEF message. A bit indicating whether bidirectional Authentication for checking whether a wireless power transmitter is authenticated by a wireless power receiver is supported is added. A bit indicating whether simultaneous Process is supported is added to shorten a required time in bidirectional Authentication.

In summary, the wireless power receiver may transmit information related to whether the wireless power receiver supports authentication, whether the wireless power receiver supports bidirectional authentication, and whether the wireless power receiver supports a simultaneous authentication process to the wireless power transmitter through the static configuration data of the NDEF message.

Also, the wireless power receiver may transmit information related to whether authentication to the wireless power receiver of the wireless power transmitter is allowed, whether bidirectional authentication of the wireless power transmitter is allowed, and whether a simultaneous authentication process of the wireless power transmitter is allowed to the wireless power transmitter through the static configuration data of the NDEF message.

Meanwhile, a wireless power transmitter may transmit the specific information described above to a wireless power receiver.

An example related to such a case will be described as follows through a drawing.

FIG. 30 schematically illustrates an example of specific information transmitted by a wireless power transmitter.

Based on FIG. 30, whether Authentication is supported may be added to specific information transmitted by a wireless power transmitter. And, Authentication may be performed between a wireless power transmitter and a wireless power receiver.

In the example of FIG. 30, summarizing examples of specific information may be as follows.
B0: Whether Authentication is supported (wireless power receiver -> wireless power transmitter) or (wireless power transmitter -> wireless power receiver)
B1: Whether bidirectional Authentication is supported (wireless power receiver -> wireless power transmitter) or (wireless power transmitter -> wireless power receiver)
B2: Whether Authentication simultaneous Process is supported

In summary, the wireless power transmitter may transmit information related to whether the wireless power transmitter supports authentication, whether the wireless power transmitter supports bidirectional authentication, and whether the wireless power transmitter supports a simultaneous authentication process to the wireless power receiver through specific information.

Also, the wireless power transmitter may transmit information related to whether authentication to the wireless power transmitter of the wireless power receiver is allowed, whether bidirectional authentication of the wireless power receiver is allowed, and whether a simultaneous authentication process of the wireless power receiver is allowed to the wireless power receiver through specific information.

Hereinafter, embodiments of the present specification will be described again from viewpoints of various subjects.

Drawings below were created to describe a specific example of the present specification. Since a name of a specific apparatus or a name of a specific signal/message/field described in the drawings is provided exemplarily, a technical feature of the present specification is not limited to a specific name used in the drawings below.

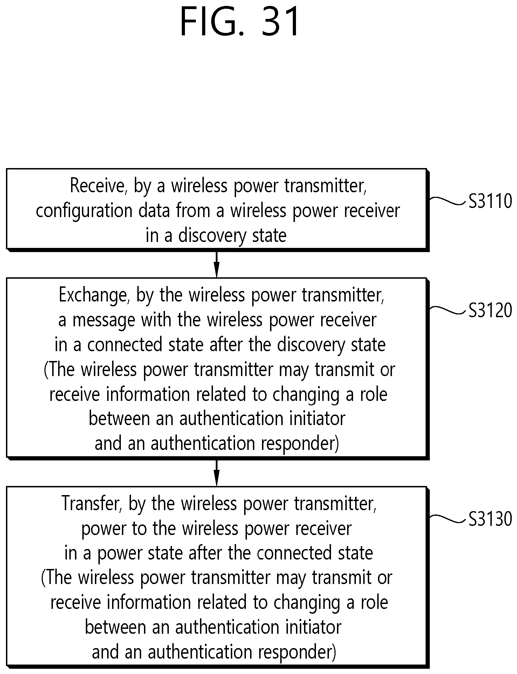

FIG. 31 is a flowchart of a method of transferring wireless power from a viewpoint of a wireless power transmitter, based on an embodiment of the present specification.

Based on FIG. 31, a wireless power transmitter may receive configuration data from a wireless power receiver in a discovery state (S3110).

The wireless power transmitter may exchange a message with the wireless power receiver in a connected state after the discovery state (S3120).

The wireless power transmitter may transfer power to the wireless power receiver in a power state after the connected state (S3130).

Here, the wireless power transmitter may transmit or receive information related to changing a role between an authentication initiator and an authentication responder.

The information related to changing the role between the authentication initiator and the authentication responder may be included in a request (RQST) message. The RQST message may be transmitted or received in the connected state or the power state.

The wireless power transmitter may transmit or receive specific information from the wireless power receiver. The specific information may include information related to whether an authentication function is supported. The specific information may include information related to whether a bi-directional authentication function is supported. The specific information may include information related to whether simultaneous authentication is supported. The specific information may be included in the configuration data. The configuration data may be included in an NFC Data Exchange Profile Format (NDEF) message.

Meanwhile, although not separately illustrated, a wireless power transmitter may be provided. The wireless power transmitter may include a circuit and coil assembly enabling transfer of power to a wireless power receiver, and a communicator transferring data to the wireless power receiver. The wireless power transmitter may receive configuration data from the wireless power receiver in a discovery state. The wireless power transmitter may exchange a message with the wireless power receiver in a connected state after the discovery state. The wireless power transmitter may transfer power to the wireless power receiver in a power state after the connected state. The wireless power transmitter may transmit or receive information related to changing a role between an authentication initiator and an authentication responder.

The wireless power transmitter at this time may correspond to the wireless power transmitter in the drawings described above and/or the drawings to be described later.

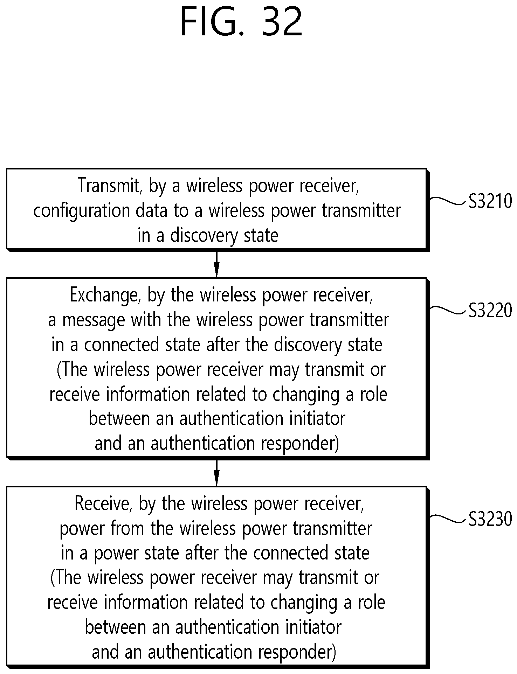

FIG. 32 is a flowchart of a method of receiving wireless power from a viewpoint of a wireless power receiver, based on an embodiment of the present specification.

Based on FIG. 32, a wireless power receiver may transmit configuration data to a wireless power transmitter in a discovery state (S3210).

The wireless power receiver may exchange a message with the wireless power transmitter in a connected state after the discovery state (S3220).

The wireless power receiver may receive power from the wireless power transmitter in a power state after the connected state (S3230).

Here, the wireless power receiver may transmit or receive information related to changing a role between an authentication initiator and an authentication responder.

The information related to changing the role between the authentication initiator and the authentication responder may be included in a request (RQST) message. The RQST message may be transmitted or received in the connected state or the power state.

The wireless power receiver may transmit or receive specific information to the wireless power transmitter. The specific information may include information related to whether an authentication function is supported. The specific information may include information related to whether a bi-directional authentication function is supported. The specific information may include information related to whether simultaneous authentication is supported. The specific information may be included in the configuration data. The configuration data may be included in an NFC Data Exchange Profile Format (NDEF) message.

Meanwhile, although not separately illustrated, a wireless power receiver may be provided. The wireless power receiver may include a circuit and coil assembly enabling reception of power to a wireless power transmitter, and a communicator transferring data to the wireless power transmitter. The wireless power receiver may transmit configuration data to the wireless power transmitter in a discovery state. The wireless power receiver may exchange a message with the wireless power transmitter in a connected state after the discovery state. The wireless power receiver may receive power from the wireless power transmitter in a power state after the connected state. The wireless power receiver may transmit or receive information related to changing a role between an authentication initiator and an authentication responder.

The wireless power receiver at this time may correspond to the wireless power receiver in the drawings described above and/or the drawings to be described later.

Hereinafter, a configuration of a wireless power transmitter and/or a wireless power receiver in a Ki standard is schematically described.

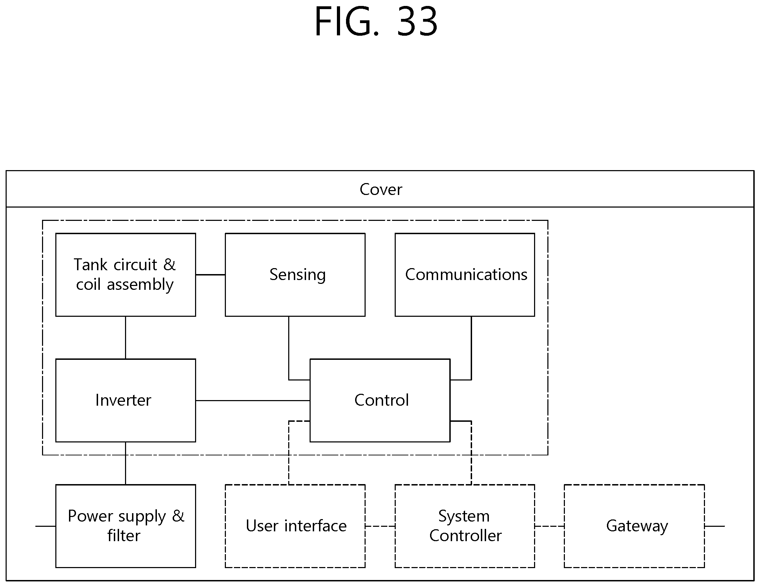

FIG. 33 illustrates one example of a wireless power transmitter that can be applied to the present specification.

Based on FIG. 33, a wireless power transmitter may include a cover, a tank circuit & coil assembly, sensing, communications, control, an inverter, a power supply & filter, a user interface, a system controller, and/or a gateway. Each configuration at this time may be as follows.

Inverter: An inverter may adjust an output voltage.

Tank circuit & coil assembly: A tank circuit may combine one or more capacitors with a power coil included in a coil assembly to generate resonance at a frequency enabling efficient power transmission in an operating frequency range.

Communications: Transmits data based on NFC-A technology, and communication may be made at a carrier frequency of 13.56 MHz using a dedicated antenna forming a concentric circle structure with a power coil.

Sensing: A sensing block may consist of various measurement circuits monitoring a parameter such as a voltage, a current, and a temperature to guarantee a safe and accurate operation.

Control: A controller may execute a conversation with a power receiver to protect an operating limit and enable foreign object detection.

Power supply & filter: This filter may prevent high-frequency noise of an inverter from propagating back to a main power line.

Gateway: An optional gateway provides an internet connection to a power transmitter, and may indirectly provide an internet connection to a power receiver provided through this.

User interface: A user interface generally includes an on/off switching and may provide status information and perform other functions.

System Controller: This optional controller may be used to drive a user interface of a power transmitter and establish a connection with an optional internet-based service.

Cover: A cover of a power transmitter apparatus, and an upper end is an interface surface.

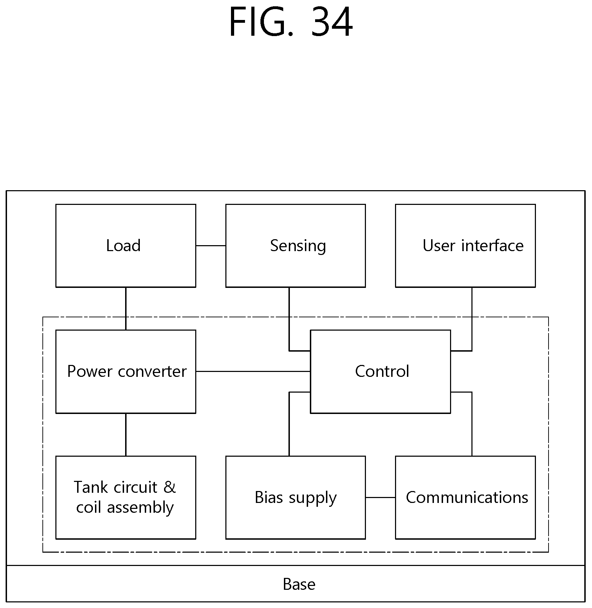

FIG. 34 illustrates one example of a wireless power receiver that can be applied to the present specification.

Based on FIG. 34, a wireless power receiver may include a base, a tank circuit & coil assembly, a power converter, a load, sensing, a user interface, control, a bias supply, and/or communications. Each configuration at this time may be as follows.

Tank circuit & coil assembly: A tank circuit may combine a secondary coil included in a coil assembly and one or more capacitors to generate resonance at a frequency enabling efficient power transmission in an operating frequency range.

Power converter: A power converter may generally include a component controlling output power for a load. A power converter block may be omitted when used in an induction heating application program.

Load: Generally, it may consist of one or more motors and/or heating elements. In a case of an induction heating appliance, a load may be a metal element of a pan, a brush, or a bowl.

Communications: Transmits data based on NFC-A technology, and communication may be made at a carrier frequency of 13.56 MHz using a dedicated antenna forming a concentric circle structure with a power coil.

Bias supply: A bias supply may provide power for driving an electronic device of a power receiver and an apparatus supplied with power. This power may be harvested from a communication carrier or a power carrier.

Sensing: A sensing block may consist of various measurement circuits monitoring a load connected to and driven by a power receiver.

Control: A controller may serve to execute a conversation with a power transmitter, guarantee that a desired amount of power enters a load, and drive a user interface.

User interface: A user interface generally includes an on/off switching and may provide status information and perform other functions.

As described above, based on the present specification, information related to whether a wireless power transmitter or receiver supports authentication, and whether bidirectional authentication and simultaneous authentication are supported is provided. In this case, effects as follows may be provided.

If it can be known whether authentication is supported in wireless power transmission, reliability can be enhanced in a power transmission and reception process. In particular, data and power transmission is safely performed by guaranteeing mutual trust between a power transmitter and a receiver through bidirectional authentication.

Also, since it can be known whether a wireless power transmitter and a receiver support the same authentication method, compatibility can be checked when different apparatuses are used together. This helps a user make a better choice when selecting an apparatus.

In addition, if it is known whether simultaneous authentication is supported, a time delay or an error that may occur in an authentication process can be reduced, and performance and stability of an entire system can be enhanced. This is especially important in a situation where several apparatuses share power simultaneously.

In addition, based on the present specification, a configuration in which a wireless power transmitter or receiver transmits information changing a role of authentication is provided. In this case, effects as follows may be provided.

An effect of providing change information of an authentication role plays an important role in resolving a problem that if only one side performs authentication, it cannot be known whether a counterpart is an authenticated apparatus. That is, if only one side performs authentication, the other side cannot check whether a counterpart is a trusted apparatus, so reliability of authentication depends only on one side.

However, if an authentication role is changed so that the other side also performs authentication, bidirectional authentication is made, and a mutually trusted relationship can be formed. Through this, a security level between apparatuses can be increased.

Specific effects obtained through specific examples of the present specification are not limited to effects listed above. For example, there may be various technical effects that a person having ordinary skill in the related art can understand or derive from the present specification. Accordingly, specific effects of the present specification are not limited to those explicitly described in the present specification, and may include various effects that can be understood or derived from technical features of the present specification.

Claims described in the present specification may be combined in various ways. For example, technical features of method claims of the present specification may be combined and implemented as an apparatus, and technical features of apparatus claims of the present specification may be combined and implemented as a method. Also, technical features of method claims and technical features of apparatus claims of the present specification may be combined and implemented as an apparatus, and technical features of method claims and technical features of apparatus claims of the present specification may be combined and implemented as a method.

## Claims

1. A method, comprising:
receiving, by a wireless power transmitter, configuration data from a wireless power receiver in a discovery state;
exchanging, by the wireless power transmitter, a message with the wireless power receiver in a connection state after the discovery state; and
transferring, by the wireless power transmitter, power to the wireless power receiver in a power state after the connection state, wherein the wireless power transmitter transmits or receives information related to changing a role between an authentication initiator and an authentication responder.

2. The method of claim 1, wherein the information related to changing the role between the authentication initiator and the authentication responder is included in a request (RQST) message.

3. The method of claim 2, wherein the RQST message is transmitted or received in the connection state or the power state.

4. The method of claim 1, wherein the wireless power transmitter transmits or receives specific information from the wireless power receiver.

5. The method of claim 4, wherein the specific information includes information related to whether an authentication function is supported.

6. The method of claim 4, wherein the specific information includes information related to whether a bi-directional authentication function is supported.

7. The method of claim 4, wherein the specific information includes information related to whether simultaneous authentication is supported.

8. The method of claim 4, wherein the specific information is included in the configuration data.

9. The method of claim 8, wherein the configuration data is included in an NFC Data Exchange Profile Format (NDEF) message.

10. A wireless power transmitter, comprising:
a circuit and coil assembly enabling transfer of power to a wireless power receiver; and
a communicator transferring data to the wireless power receiver,
wherein the wireless power transmitter:
receives configuration data from the wireless power receiver in a discovery state;
exchanges a message with the wireless power receiver in a connection state after the discovery state; and
transfers power to the wireless power receiver in a power state after the connection state,
wherein the wireless power transmitter transmits or receives information related to changing a role between an authentication initiator and an authentication responder.

11. A method, comprising:
transmitting, by a wireless power receiver, configuration data to a wireless power transmitter in a discovery state;
exchanging, by the wireless power receiver, a message with the wireless power transmitter in a connection state after the discovery state; and
receiving, by the wireless power receiver, power from the wireless power transmitter in a power state after the connection state, wherein the wireless power receiver transmits or receives information related to changing a role between an authentication initiator and an authentication responder.

12. The method of claim 11, wherein the information related to changing the role between the authentication initiator and the authentication responder is included in a request (RQST) message.

13. The method of claim 12, wherein the RQST message is transmitted or received in the connection state or the power state.

14. The method of claim 11, wherein the wireless power receiver transmits or receives specific information to the wireless power transmitter.

15. The method of claim 14, wherein the specific information includes information related to whether an authentication function is supported.

16. The method of claim 14, wherein the specific information includes information related to whether a bi-directional authentication function is supported.

17. The method of claim 14, wherein the specific information includes information related to whether simultaneous authentication is supported.

18. The method of claim 14, wherein the specific information is included in the configuration data.

19. The method of claim 18, wherein the configuration data is included in an NFC Data Exchange Profile Format (NDEF) message.

20. A wireless power receiver, comprising:
a circuit and coil assembly enabling reception of power to a wireless power transmitter; and
a communicator transferring data to the wireless power transmitter,
wherein the wireless power receiver:
transmits configuration data to the wireless power transmitter in a discovery state;
exchanges a message with the wireless power transmitter in a connection state after the discovery state; and
receives power from the wireless power transmitter in a power state after the connection state,
wherein the wireless power receiver transmits or receives information related to changing a role between an authentication initiator and an authentication responder.
